# EUROPEAN PATENT APPLICATION

(11) **EP 4 686 147 A1**
(43) Date of publication of application: **28.01.2026**
(21) Application number: 24791855.0
(22) Date of filing: 01.04.2024
(51) Int. Cl.: H04L 9/32

(54) **COMMUNICATION METHOD AND APPARATUS**

(30) Priority: 18.04.2023 CN 202310424754
(71) Applicant: Huawei Technologies Co., Ltd., Shenzhen, Guangdong 518129 (CN)
(72) Inventor: GUO, Yanfei, Shenzhen, Guangdong 518129 (CN); WU, Yizhuang, Shenzhen, Guangdong 518129 (CN); LI, Lun, Shenzhen, Guangdong 518129 (CN)
(74) Representative: Gill Jennings & Every LLP
(86) International application number: PCT/CN2024/085330
(87) International publication number: WO 2024/217270

(57) **Abstract**

A communication method and apparatus relate to the field of communication technologies, and are provided to resolve a communication security problem caused because an NF pretends to be another NF to request a certificate from a CA. In this application, the CA receives a certificate request message, where the certificate request message includes indication information, a first instance identity of the NF, and a signature, the indication information indicates that the certificate request message includes the signature, the signature is a signature of a trusted function for a second instance identity of the NF, and the trusted function is specifically a function trusted by the CA. The CA may perform verification based on the signature and the first instance identity of the NF. When the verification succeeds, the CA sends a certificate of the NF.

## Description

### CROSS-REFERENCE TO RELATED APPLICATIONS

This application claims priority to Chinese Patent Application No. 202310424754.9, filed with the China National Intellectual Property Administration on April 18, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

An asymmetric cryptographic algorithm is a cryptographic algorithm that is compiled according to a principle of a trapdoor one-way function and in which an encryption key is public and a decryption key is confidential. A public key infrastructure (public key infrastructure, PKI) is an infrastructure established according to the asymmetric cryptographic algorithm to provide a security service. A main function of the PKI is to issue a certificate for a user's public key and related user identity information to bind a user identity and a key pair. The PKI may provide a user with convenient methods for certificate request, certificate revocation, certificate obtaining, and certificate status query, and use the certificate and related services (such as certificate release and blocklist release) to implement identity authentication, integrity, non-repudiation, and confidentiality of network function (network function, NF) entities during communication.

In a PKI system, a certification authority (certification authority, CA, which may also be referred to as a certificate authentication function) may issue a certificate to an NF. Specifically, the NF sends a certificate request message to the CA, where the certificate request message carries an instance identity (instance ID) of the NF. Correspondingly, the CA issues the certificate to the NF based on the instance identity of the NF.

However, the NF may include an instance identity of another NF in the certificate request message, and pretend to be the another NF to request a certificate from the CA. The CA cannot determine that the instance identity in the certificate request message is not a real instance identity of the NF, and issues the certificate to the NF based on the instance identity of the another NF. Consequently, there is a communication security problem.

### SUMMARY

This application provides a communication method and apparatus, so that a CA can verify whether an instance identity of an NF in a certificate request message is a real instance identity of a message initiator NF, that is, the CA can verify whether the message initiator NF pretends to be another NF to request a certificate of the another NF, to ensure communication security.

According to a first aspect, this application provides a communication method. The communication method may be specifically performed by a CA, or may be performed by a module (for example, a chip or a circuit) in the CA. The following uses an example in which the communication method is performed by the CA for description.

The CA receives a certificate request message, where the certificate request message includes indication information, a first instance identity of an NF, and a signature, the indication information indicates that the certificate request message includes the signature, the signature is a signature of a trusted function for a second instance identity of the NF, and the trusted function is specifically a function trusted by the CA. For example, the trusted function is operation administration and maintenance (operation administration and maintenance, OAM). The CA performs verification based on the signature and the first instance identity of the NF. When the verification succeeds, the CA sends a certificate of the NF.

In a possible manner, the CA first obtains the indication information by parsing the certificate request message, determines, based on the indication information, that the certificate request message further includes the signature, obtains the signature, and performs the verification based on the signature and the first instance identity of the NF. In a possible manner, the CA performs the verification based on the signature and the first instance identity, and after determining that the verification succeeds, the CA sends the certificate of the NF. In a possible manner, that the verification succeeds may be specifically as follows: The CA determines that the first instance identity is the same as the second instance identity; or the CA determines that an instance identity of the NF carried in the certificate request message is an instance identity of the NF signed (or authenticated) by the trusted function; or the CA determines that an instance identity of the NF carried in the certificate request message is a real instance identity of the NF; or the CA determines that the NF does not pretend to be another NF to request a certificate of the another NF when sending the certificate request message; or the CA determines that the CA can issue a certificate to the message initiator NF.

In a possible example, the CA is located in a core network, and the CA may directly communicate with the NF. Specifically, the CA receives the certificate request message from the NF, and sends the certificate of the NF to the NF.

In another possible example, the CA is located outside the core network, a certificate management function is located in the core network, and a message transmitted between the CA and the NF is forwarded by the certificate management function. Specifically, the CA receives the certificate request message that is from the NF and that is forwarded by the certificate management function, and the CA sends the certificate of the NF to the NF via the certificate management function.

In still another possible example, the CA is located outside the core network, the certificate management function is located in the core network, and the certificate management function may replace the NF to request the certificate from the CA. Specifically, the CA receives the certificate request message from the certificate management function, and the CA sends the certificate of the NF to the certificate management function. Then, the certificate management function sends the certificate of the NF to the NF.

In the foregoing technical solution, the certificate request message carries the signature of the trusted function for the second instance identity of the NF. Correspondingly, the CA may perform verification based on the signature and the first instance identity in the certificate request message, to ensure that an instance for requesting a certificate is an instance corresponding to the first instance identity in the certificate request message, that is, prevent the message initiator NF from pretending to be another NF to request a certificate from the CA, to provide protection for authenticity of an instance of the NF, and help ensure communication security.

In a possible implementation, a format of the certificate request message conforms to a protocol message format of a certificate management protocol version 2. In this way, an existing message format and usages of fields do not need to be changed. Therefore, an implementation is simple.

In a possible implementation, that the CA performs verification based on the signature and the first instance identity of the NF may be specifically as follows: The CA performs verification based on the signature, the certificate of the trusted function, and the first instance identity of the NF. For example, the CA inputs the signature, the certificate of the trusted function, and the first instance identity of the NF into a preset verification algorithm, and an output verification result may indicate whether the verification succeeds. This helps improve verification accuracy.

In a possible implementation, before performing verification based on the signature and the first instance identity of the NF, the CA may further determine a location of the signature in the certificate request message, and extract the signature from the determined location. Optionally, the CA determines the location of the signature in the certificate request message based on the indication information in the certificate request message. In the foregoing technical solution, the CA may quickly obtain the signature based on the indication information in the certificate request message, and complete verification quickly.

In a possible implementation, the indication information is carried in a registration information field, and the signature is carried in a control field. In this way, the CA can distinguish the certificate request message from another certificate request message that does not carry the signature of the trusted function to perform different processing. In addition, the CA determines, based on the indication information, that the certificate request message further carries the signature, determines a location at which the signature is carried in the certificate request message, and extracts the signature from the determined location. In this way, the CA can quickly obtain the signature. This helps improve verification efficiency of the CA. In a possible implementation, a type of the control field is a registration token type. In this way, the CA may issue the certificate to the NF once. In a possible implementation, the type of the control field is an authenticator type. In this way, the CA may issue the certificate to the NF for a plurality of times.

In a possible implementation, the indication information is carried in a protection algorithm field, and the signature is carried in the protection field. In a possible implementation, the indication information is a preset protection algorithm, and the preset protection algorithm indicates to use the signature for protection. In the foregoing technical solution, a current default integrity protection mechanism of the certificate management protocol version 2 is reused. In this way, the existing message format and the usages of the fields do not need to be changed, and the location at which the signature is carried in the certificate request message does not need to be preconfigured or indicated. Therefore, an implementation is simple. In addition, the CA determines, based on the indication information, that the certificate request message further carries the signature, determines a location at which the signature is carried in the certificate request message, and extracts the signature from the determined location. In this way, the CA can quickly obtain the signature. This helps improve verification efficiency of the CA.

In a possible implementation, in a header field, the indication information occupies an information type field, and the signature occupies an information value field corresponding to the information type field, where the indication information is a preset information type. In this way, the preset information type is defined, and the preset information type indicates that a value in the information value field is the signature. Therefore, the existing message format and the usages of the fields do not need to be changed, and the location at which the signature is carried does not need to be separately indicated. Therefore, an implementation is simple. In addition, when the CA reads the information type field in the header field, and a value of the information type field is the preset information type (that is, the indication information), the CA determines that the value of the information value field corresponding to the information type field is the signature, so that the CA can quickly extract the signature from the information value field. This helps improve verification efficiency of the CA.

In a possible implementation, the certificate request message is a first PKI message, and the certificate request message includes a second PKI message. An information type field in a body field of the second PKI message indicates that an information value field corresponding to the information type field is the second instance identity of the NF. A protection algorithm field in a header field of the second PKI message includes the indication information, and the indication information indicates that a protection field of the second PKI message includes the signature. The signature is specifically a signature for the header field and the body field in the second PKI message, that is, a signature for the second instance identity of the NF in the body field of the second PKI message. In the foregoing technical solution, the NF includes the second PKI message in the certificate request message (that is, the first PKI message), and includes the signature of the trusted function for the second instance identity of the NF in the protection field of the second PKI message. The trusted function does not need to configure a signature for the NF in advance, that is, the trusted function can generate a signature online in real time. This is more flexible.

In a possible implementation, that the CA performs verification based on the signature and the first instance identity of the NF may be specifically: The CA determines, based on the signature, the certificate of the trusted function, the header field of the second PKI message, and the body field of the second PKI message, that integrity verification on the second PKI message succeeds; and then the CA determines, based on the second instance identity of the NF in the body field of the second PKI message and the first instance identity of the NF in a certification template field of a body field of the first PKI message, that the verification succeeds. For example, when determining that the second instance identity of the NF in the body field of the second PKI message is consistent with the first instance identity of the NF in the certification template field of the body field of the first PKI message, the CA determines that the verification succeeds. In the foregoing technical solution, after performing integrity verification on the second PKI message, the CA verifies the first instance identity of the NF in the certification template field of the first PKI message by using the second instance identity of the NF in the body field of the second PKI message. This helps improve verification accuracy.

According to a second aspect, this application provides a communication method. The communication method may be specifically performed by an NF, or may be specifically performed by a module (for example, a chip or a circuit) in the NF. The following uses an example in which the communication method is performed by the NF for description.

The NF sends a certificate request message to a CA, where the certificate request message includes indication information, a first instance identity of the NF, and a signature, the indication information indicates that the certificate request message includes the signature, the signature is a signature of a trusted function for a second instance identity of the NF, the trusted function is specifically a function trusted by the CA. For example, the trusted function is OAM. The NF receives a certificate of the NF from the CA. Optionally, the signature and the first instance identity of the NF are used for verification. Optionally, when the verification based on the signature and the first instance identity of the NF succeeds, the NF receives the certificate of the NF from the CA.

In a possible manner, that the verification succeeds may be specifically: The first instance identity is the same as the second instance identity; or an instance identity of the NF carried in the certificate request message is an instance identity of the NF signed (or authenticated) by the trusted function; or an instance identity of the NF carried in the certificate request message is a real instance identity of the NF; or the NF does not pretend to be another NF to request a certificate of the another NF when sending the certificate request message.

In a possible example, the CA is located in a core network, the CA may directly communicate with the NF, and the NF is specifically configured to: send the certificate request message to the CA, and receive the certificate of the NF from the CA.

In another possible example, the CA is located outside the core network, a certificate management function is located in the core network, and a message transmitted between the CA and the NF is forwarded by the certificate management function. Specifically, the NF sends the certificate request message to the CA via the certificate management function, and the NF receives the certificate that is from the CA and that is forwarded by the certificate management function.

In a possible implementation, a format of the certificate request message conforms to a protocol message format of a certificate management protocol version 2.

In a possible implementation, the indication information is carried in a registration information field, and the signature is carried in a control field. Optionally, a type of the control field is a registration token type or an authenticator type.

In a possible implementation, the indication information is carried in a protection algorithm field, and the signature is carried in the protection field. Optionally, the indication information is a preset protection algorithm, and the preset protection algorithm indicates to use the signature for protection.

In a possible implementation, in a header field, the indication information occupies an information type field, and the signature occupies an information value field corresponding to the information type field, where the indication information is a preset information type.

In a possible implementation, the certificate request message is a first PKI message, and the certificate request message includes a second PKI message. An information type field in a body field of the second PKI message indicates that an information value field corresponding to the information type field is the second instance identity of the NF. A protection algorithm field in a header field of the second PKI message includes the indication information, and the indication information indicates that a protection field of the second PKI message includes the signature. The signature is specifically a signature for the header field and the body field in the second PKI message, that is, a signature for the second instance identity of the NF in the body field of the second PKI message.

In a possible implementation, before sending the certificate request message to the CA, the NF further receives the second PKI message from the trusted function, and generates the first PKI message based on the second PKI message. In this way, the NF only needs to nest the second PKI message in the first PKI message (that is, the certificate request message), to reduce difficulty in constructing the certificate request message for the NF.

According to a third aspect, this application provides a communication method. The communication method may be performed by a certificate management function, or may be performed by a module (for example, a chip or a circuit) in the certificate management function. The following uses an example in which the communication method is performed by the certificate management function for description. A CA is located outside a core network, the certificate management function is located in the core network, and the certificate management function replaces an NF to request a certificate from the CA. In the communication method, the certificate management function sends a certificate request message to the CA, where the certificate request message includes indication information, a first instance identity of the NF, and a signature, the indication information indicates that the certificate request message includes the signature, the signature is a signature of a trusted function for a second instance identity of the NF, the trusted function is specifically a function trusted by the CA. For example, the trusted function is OAM. The certificate management function receives a certificate of the NF from the CA, and the certificate management function sends the certificate of the NF to the NF. Optionally, the signature and the first instance identity of the NF are used for verification. Optionally, when the verification succeeds, the certificate management function receives the certificate of the NF from the CA.

According to a fourth aspect, an embodiment of this application provides a communication apparatus. The apparatus is configured to implement the method according to any one of the first aspect or the possible implementations of the first aspect. The apparatus may be a CA or a module (for example, a chip or a circuit) in the CA.

Alternatively, the communication apparatus may be configured to implement the method according to any one of the second aspect or the possible implementations of the second aspect. The apparatus may be an NF or a module (for example, a chip or a circuit) in the NF.

Alternatively, the communication apparatus may be configured to implement the method according to any one of the third aspect or the possible implementations of the third aspect. The apparatus may be a certificate management function or a module (for example, a chip or a circuit) in the certificate management function.

Functions of the foregoing communication apparatus may be implemented by hardware, or may be implemented by hardware executing corresponding software. The hardware or the software includes one or more modules, units, or means (means) corresponding to the foregoing functions.

In a possible implementation, a structure of the apparatus includes a processing module and a transceiver module. The processing module is configured to support the apparatus in performing a function corresponding to the CA in any one of the first aspect or the implementations of the first aspect, or performing a function corresponding to the NF in any one of the second aspect or the implementations of the second aspect, or performing a function corresponding to the certificate management function in any one of the third aspect or the implementations of the third aspect. The transceiver module is configured to support communication between the apparatus and another communication device. For example, when the apparatus is a CA, the apparatus may receive a certificate request message from an NF. The communication apparatus may further include a storage module. The storage module is coupled to the processing module, and stores program instructions and data that are necessary for the apparatus. In an example, the processing module may be a processor, the communication module may be a transceiver, the storage module may be a memory, and the memory may be integrated with the processor, or may be disposed separately from the processor.

In another possible implementation, a structure of the apparatus includes a processor, and may further include a memory. The processor is coupled to the memory, and may be configured to execute computer program instructions stored in the memory, to enable the apparatus to perform the method according to any one of the first aspect or the possible implementations of the first aspect, the method according to any one of the second aspect or the possible implementations of the second aspect, or the method according to any one of the third aspect or the possible implementations of the third aspect.

According to a fifth aspect, an embodiment of this application provides a chip system, including a processor and a memory. The processor is coupled to the memory, and the memory is configured to store a program or instructions. When the program or the instructions is/are executed by the processor, the chip system is enabled to implement the method according to any one of the first aspect or the possible implementations of the first aspect, the method according to any one of the second aspect or the possible implementations of the second aspect, or the method according to any one of the third aspect or the possible implementations of the third aspect.

Optionally, the chip system further includes an interface circuit, and the interface circuit is configured to exchange code instructions with the processor.

Optionally, there may be one or more processors in the chip system, and the processor may be implemented by using hardware or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. For example, the memory may be a non-transitory processor, for example, a read-only memory ROM. The memory and the processor may be integrated on a same chip, or may be arranged on different chips respectively.

According to a sixth aspect, an embodiment of this application provides a computer-readable storage medium. The computer-readable storage medium stores a computer program or instructions. When the computer program or the instructions is/are executed, a computer is enabled to perform the method according to any one of the first aspect or the possible implementations of the first aspect, the method according to any one of the second aspect or the possible implementations of the second aspect, or the method according to any one of the third aspect or the possible implementations of the third aspect.

According to a seventh aspect, an embodiment of this application provides a computer program product. When a computer reads and executes the computer program product, the computer is enabled to perform the method according to any one of the first aspect or the possible implementations of the first aspect, the method according to any one of the second aspect or the possible implementations of the second aspect, or the method according to any one of the third aspect or the possible implementations of the third aspect.

According to an eighth aspect, an embodiment of this application provides a communication system. The communication system includes the CA in any one of the first aspect or the possible implementations of the first aspect and the NF in any one of the second aspect or the possible implementations of the second aspect. Alternatively, the communication system includes the CA in any one of the first aspect or the possible implementations of the first aspect and the certificate management function in any one of the third aspect or the possible implementations of the third aspect.

For technical effect that can be achieved in any one of the second aspect to the eighth aspect, refer to the descriptions of beneficial effect in the first aspect. Details are not described herein again.

### BRIEF DESCRIPTION OF DRAWINGS

FIG. 1a is a diagram of a network architecture;
FIG. 1b is a diagram of another network architecture;
FIG. 2 is a diagram of a 5G network architecture based on an SBA;
FIG. 3 is a schematic flowchart of a communication method according to an example of this application;
FIG. 4 is a diagram of a first format of a certificate request message according to an example of this application;
FIG. 5 is a schematic flowchart of a communication method applicable to a first format according to an example of this application;
FIG. 6 is a diagram of a second format of a certificate request message according to an example of this application;
FIG. 7 is a schematic flowchart of a communication method applicable to a second format according to an example of this application;
FIG. 8 is a diagram of a third format of a certificate request message according to an example of this application;
FIG. 9 is a schematic flowchart of a communication method applicable to a third format according to an example of this application;
FIG. 10 is a diagram of a fourth format of a certificate request message according to an example of this application;
FIG. 11 is a schematic flowchart of a communication method applicable to a fourth format according to an example of this application;
FIG. 12 is a schematic flowchart of a communication apparatus according to an example of this application; and
FIG. 13 is a schematic flowchart of another communication apparatus according to an example of this application.

### DESCRIPTION OF EMBODIMENTS

To better explain embodiments of this application, related terms or technologies in this application are first explained as follows:

### I. Public key infrastructure (public key infrastructure, PKI)

The PKI is an infrastructure established by using an asymmetric cryptographic theory and technology to provide a security service. A main function of the PKI is to issue a certificate for a user's public key and related user identity information to bind an identity of a certificate holder and a related key pair. The PKI provides convenient methods for certificate request, certificate revocation, certificate obtaining, and certificate status query for the user, and uses the certificate and related services (such as certificate release, blocklist release, and a timestamp service) to implement identity authentication, integrity, non-repudiation, and confidentiality of entities during communication.

In a PKI system, a CA issues a certificate and binds identity information and a public key of a PKI user. A PKI relying party (relying party) pre-stores a self-signed certificate of a trusted root CA (that is, a root certificate of the CA) to verify a certificate chain of the PKI user who communicates with the relying party. In this way, the relying party obtains the public key of the user in a trusted manner for various security services.

The PKI system may include components such as a certificate, a CA, a certificate database, a certificate revocation system, a key backup and recovery system, and a PKI application interface system. For details, refer to Table 1.

**Table 1**

| Component | Description |
|---|---|
| Certificate | The certificate is an electronic credential that includes a public key used for signing and data encryption, and is a core element of the PKI. |
| End entity (end entity, EE) | In the PKI system, the end entity is an entity configured to subscribe to a CA service, apply for a certificate from the CA, obtain a certificate list publicly released by the CA, and revoke the certificate list. |
| CA | The CA is an authority from which a certificate is applied for and that issues the certificate, and needs to be authoritative. |
| | The CA may further include a registration authority (registration authority, RA), and the RA is configured to send a certificate issuing request to the CA after obtaining and authenticating a user identity. The RA may be a function integrated into the CA, or may be deployed independently. |
| Certificate database | The certificate database stores issued certificates and public keys, and related certificate directories, and therefore, a user can obtain a required certificate and public key of another user. |
| CRL/OCSP | The certificate revocation list (certificate revocation list, CRL) is a list of certificates that are revoked within a validity period; and the online certificate status protocol (online certificate status protocol, OCSP) is an international protocol used to obtain a certificate status. |
| Key backup and recovery | The PKI provides a key backup and recovery mechanism to prevent a failure to decrypt valid data because the user loses a decryption key. This function needs to be implemented by a trusted authority. In addition, key backup and recovery can be performed on only the decryption key, and a signature private key cannot be backed up. |
| PKI application interface | The PKI application interface provides secure, consistent, and trusted methods for various applications to interact with the PKI, to ensure a secure and reliable established network environment and reduce management costs. |

### II. Certificate management protocol (certificate management protocol, CMP)

The CMP is an internet protocol used to obtain certificates that comply with the Internet X.509 (Internet X.509) standard in the PKI system. The CMP is described in detail in the Internet engineering task force (the Internet engineering task force, IETF) request for comments (request for comments, RFC) 4210. The CMP is used to: provide online interaction between PKI components, including interaction between the CA and a client system, and define protocol messages for creating and managing certificates. Format requirements for a PKI message (PKI message) used for communication between related entities or components in the PKI system are defined in CMPv2 (CMP version 2). The PKI message mainly includes a header (header) field, a body (body) field, a protection (protection) field, and an extra certificates (extra certificates, extraCerts) field.

### 1. Header field

The header field is a mandatory (critical) field in the PKI message, and includes one or more general information (general information, generalInfo) fields. The general information field may be used to send machine-processable extra data to a receiver. The general information field includes a mapping relationship between an information type (information type, infoType) field and an information value (information value, infoValue) field, and the information type field indicates an information type corresponding to the information value field.

Currently, 16 information type fields are mainly defined, including CA encryption certificate, signature key pair, encryption or key agreement key pair, preferred symmetric algorithm, updated CA key pair, unsupported identity, key parameter, revocation password, implicit confirmation, confirmation waiting time, original PKI message, supported language, and the like. The information type field may be represented by {id-it x}, where x represents a sequence number of the information type field. For a definition of the id-it x, refer to the descriptions in IETF RFC4211 ("Internet X.509 Public Key Infrastructure Certificate Request Message Format (CRMF)").

The header field further includes a protection algorithm (protection algorithm, protection Alg) field. The protection algorithm field includes an integrity protection algorithm, and the integrity protection algorithm may be an MSG_MAC_ALG algorithm, an MSG_SIG_ALG algorithm, or the like. The MSG_MAC_ALG algorithm may determine a MAC used for integrity verification, and the MSG_MAC_ALG algorithm includes a shared secret (shared secret) algorithm and a diffie-hellman key pairs (diffie-hellman key pairs, DH key pairs) algorithm. The MSG_SIG_ALG algorithm may determine a signature used for integrity verification, and the MSG_SIG_ALG algorithm may also be referred to as an integrity signature algorithm.

### 2. Body field

The body field is a mandatory field in the PKI message, and the body field may include a plurality of types such as an initialization request (initialization request, ir), a certification request (certification request, cr), a key update request (key update request, kur), PKI confirm content (PKI confirm content, pkiconf), and general message content (general message content, genm). Messages of the ir, cr, or kur type use a certificate request message format (that is, IETF RFC4211 ("Internet X.509 Public Key Infrastructure Certificate Request Message Format (CRMF)")).

A data structure of a certificate request message is specifically described below.

The data structure of the certificate request message includes a certification request (certification request, certReq) field, a proof of possession (proof of possession, popo) field, and a registration information (region information, regInfo) field.
(1) The certification request field includes a template of a requested certificate. Content of the template is filled in by an end entity that applies for the certificate. The end entity does not need to specify all fields in the template. Further, the data structure of the certification request field includes a certification request identity (certReqId) field, a certification template (certification template, certTemplate) field, and a control (control) field. The certification request identity field includes an integer value, and a certificate applicant uses the integer value to associate a specific certification request with a certification response. The certification template field includes a template of the Internet X.509 certificate.

A certification request field may include a control field related to request processing. The RFC 4211 defines the following types of control fields: a registration token (registration token, regToken) field, an authenticator (authenticator) field, a PKI publication information (PKIPublicationInfo) field, a PKI archive option (PKIArchiveOptions) field, and the like. In other words, the control field may be a registration token type, an authenticator type, a PKI publication information type, a PKI archive option type, or the like. Each certificate request protocol (certificate request protocol, CRP) needs to define a control field supported by the CRP. Additional control fields may be defined by another RFC or the CRP.

The registration token field and the authenticator field may be used to carry content related to entity identity verification.

The registration token field includes one-time information (that is, a registration token value) based on a secret value or other shared information, and is used by the CA to verify the identity of the entity before the CA issues a certificate. After the CA receives an authentication request including the registration token value, the CA verifies the information to confirm the identity claimed in the authentication request. The registration token value may be generated by the CA and provided to the user out of band, or may be available to both the CA and the user. The registration token value is not encrypted when being returned. If data is considered sensitive, the requester needs to encrypt the data. The registration token value is only used to initialize the end entity to the PKI message. In some usage examples, the registration token value may be a text string or a digital parameter, for example, a random number.

The authenticator field includes information (that is, an authenticator value) that is continuously used, and is used to establish an identity non-encryption check during communication with the CA. The authenticator value is, for example, the last four digits of a social security number, other knowledge-based information shared with the CA, a hash of such information, or other information produced for this purpose. The authenticator value may be generated by the user or the CA. In some usage examples, the authenticator value may be a text string or a digital parameter, for example, a random number.
(2) The proof of possession field includes a value used to prove that an entity that is to be identified as a certificate subject actually possesses a corresponding private key. A structure and content of this field vary according to a public key algorithm, an encryption algorithm, and a signature algorithm.
(3) The registration information field includes supplementary information (that is, a registration information value) related to a certificate request context. If the information is required for completing the request, the information may include subscriber contact information, charging information, or other auxiliary information that is useful for fulfilling the request. Specifically, the registration information field may carry a name-value (name-value) pair, and a value rule of the name-value pair is as follows: Each name includes an identifier of a single character name table followed by a name value with one or more UTF-8 characters. In the name value, when a character having a format meaning at an external level needs to be eliminated, an escape sequence %xx needs to be used, where xx represents a hexadecimal value related to encoding, and a percentage symbol is represented by %%.

### 3. Protection field

The protection field is an optional (non-critical) field in the PKI message. When the PKI message needs to be protected, the PKI message includes the protection field.

Further, the protection field may include a message authentication code (message authentication code, MAC) or a signature that provides integrity protection for the header field and the body field in the PKI message. A specific algorithm may be indicated in the protection algorithm field in the header field. There may be the following cases. Case 1: Shared secret: A key is shared in an out-of-band manner in advance, and the protection field includes a MAC obtained through calculation of the header field and the body field by using the shared key. Case 2: DH key pairs: If a sender and a receiver have DH certificates with compatible DH parameters, to protect the message, the end entity needs to generate a symmetric key based on a private DH key value of the end entity and a DH public key of the PKI message receiver. The protection field includes a MAC calculated by using this key. Case 3: Signature: The sender has a signature key pair and simply signs the PKI message. The protection field includes the signature, and a value of the protection algorithm field is an algorithm identifier of a digital signature. Case 4: Multi-level protection: When the end entity sends the protected PKI message to the RA, the RA may forward the PKI message to the CA to append protection from the RA. This may be implemented by nesting the entire PKI message sent by the end entity in a new PKI message. Specifically, the PKI message that needs to be nested may be placed in a general information field in a header field of the PKI message newly constructed by the RA. A type of the general information field is {id-it 15}, and a value corresponding to {id-it 15} is the nested PKI message.

### 4. Extra certificates field

The extra certificates field is an optional field in the PKI message. The extra certificates field includes a certificate. For example, if the CA that issues a certificate to the end entity is not a root CA of the end entity, the CA may provide the end entity with a certificate required for verifying a new certificate of the end entity through the extra certificates field.

### III. Internet X.509 certificate

The internet X.509 certificate includes certificate information (tbsCertificate), a signature algorithm (signatureAlgorithm), and a signature value (signatureValue). The certificate information mainly includes information in Table 2.

**Table 2**

| Information name | Information function |
|---|---|
| Certificate version (version) | A version of the X.509 standard used for the certificate is identified, which may affect information that can be specified in the certificate. |
| Certificate serial number (certificate serial number) | The entity that issues a certificate is responsible for specifying a serial number for the certificate, to distinguish the certificate from other certificates issued by the entity. This information is used for many purposes. For example, if a certificate is revoked, a serial number of the certificate is placed in the CRL. |
| Algorithm identifier (algorithm identifier) | The algorithm identifier is used to identify an algorithm used when the CA signs a certificate. |
| Certificate issuer (issuer) | The certificate issuer is a name of an entity that issues a certificate, and is usually a CA. Using the certificate means trusting the entity that issues the certificate (note: in some cases (for example, for a root CA certificate or a top-layer CA certificate), the issuer signs the certificate). |
| Certificate subject (subject) | The certificate subject is an entity name of a certificate that can identify a public key of the certificate. |
| Certificate subject public key information (subject public key info) | A public key of the certificate subject includes an algorithm identifier specifying a public key cryptosystem to which the key belongs and all related key parameters. |
| Certificate validity period | The certificate validity period is a time period in which the certificate is valid. The certificate becomes invalid after the time period. |
| Certificate signature | The certificate signature is information indicating that the CA that issues a certificate uses a CA private key to sign the certificate. |
| Certificate extensions (extensions) | Some optional extensions of the certificate for extending functions or identities. The extensions are classified into mandatory extensions and optional extensions. |

The certificate extensions define an authority key identifier (authority key identifier), a subject key identifier (subject key identifier), a key usage (key usage), certificate policies (certificate policies), a subject alternative name (subject alternative name, SAN), an issuer alternative name (issuer alternative name), subject directory attributes (subject directory attributes), basic constraints (basic constraints), name constraints (name constraints), policy constraints (policy constraints), an extended key usage (extended key usage), certificate revocation list distribution points (CRL distribution points), an inhibit anypolicy (inhibit anypolicy), a freshest (freshest) CRL, and the like. The CRL distribution points and the freshest CRL define how to obtain CRL information and incremental CRL information. It should be noted that if another revocation or certificate status mechanism (for example, the OCSP) is provided, the CA does not need to issue a CRL. Therefore, the two CRL-related extensions are optional.

Further, in 3GPP TS 33.310, a certificate profile (profile) (equivalent to the foregoing certificate information) of an NF (or a network element) in a core network is defined, and a subject alternative name of the certificate profile carries an instance identity of the NF. The instance identity of the NF may be a string used to uniquely identify an instance of the NF. The instance identity of the NF is, for example, a universally unique identifier (universally unique identifier, UUID), and the UUID is, for example, "f81d4fae-7dec-11d0-a765-00a0c91e6bf6".

The following describes in detail embodiments of this application with reference to accompanying drawings.

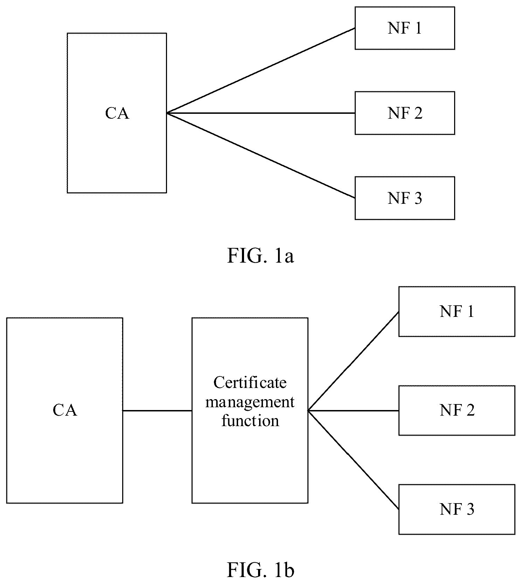

FIG. 1a is a diagram of a network architecture according to this application. The network architecture includes a CA and a plurality of NFs (FIG. 1a shows an NF 1 to an NF 3, but a quantity of NFs is not limited in this application). The CA may be located in a core network. Any NF can request a certificate of the NF from the CA. In a possible example, the NF sends a certificate request message to the CA. Correspondingly, the CA sends the certificate of the NF to the NF in response to the certificate request message.

FIG. 1b is a diagram of another network architecture according to this application. The network architecture includes a CA, a certificate management function, and a plurality of NFs (FIG. 1b shows an NF 1 to an NF 3, but a quantity of NFs is not limited in this application). The CA may be located outside a core network, and the certificate management function may be located in the core network. In a possible manner, the NF sends a certificate request message to the CA. Correspondingly, the CA sends a certificate of the NF to the NF in response to the certificate request message. All messages exchanged between the NF and the CA are forwarded by the certificate management function. In another possible manner, the certificate management function may replace the NF to request a certificate of the NF from the CA, and send the requested certificate of the NF to the NF. In other words, the certificate management function sends a certificate request message to the CA, where the certificate request message is used to apply for a certificate for an NF. Correspondingly, the CA sends the certificate of the NF to the certificate management function in response to the certificate request message, and then the certificate management function sends the certificate of the NF to the NF.

In FIG. 1a or FIG. 1b, the NF may be specifically a function in the core network, for example, unified data management (unified data management, UDM), a unified data repository (unified data repository, UDR), a network exposure function (network exposure function, NEF), an application function (application function, AF), a policy control function (policy control function, PCF), an access and mobility management function (access and mobility management function, AMF), a session management function (session management function, SMF), a user plane function (user plane function, UPF), a network data analytics function (network data analytics function, NWDAF), a network slice selection function (network slice selection function, NSSF), an authentication server function (authentication server function, AUSF), a network slice specific authentication and authorization function (network slice specific authentication and authorization function, NSSAAF), a network repository function (network repository function, NRF), and the like.

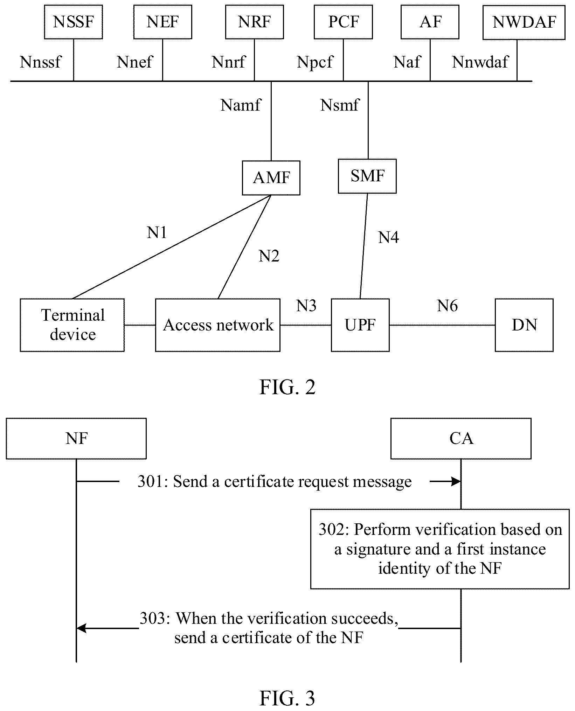

Based on FIG. 1a and FIG. 1b, FIG. 2 is a diagram of an example of a 5G network architecture of a service-based architecture (service-based architecture, SBA). The 5G network architecture may include a terminal device, an access network, and a core network. The terminal device accesses a data network (data network, DN) through the access network and the core network.

The access network includes a radio access network (radio access network, RAN) device. For example, the radio access network device may be a base station (base station), an evolved NodeB (evolved NodeB, eNodeB), a transmission reception point (transmission reception point, TRP), a next generation NodeB (next generation NodeB, gNB) in a 5G mobile communication system, a next generation NodeB in a 6th generation (the 6th generation, 6G) mobile communication system, a NodeB in a future mobile communication system, an access node in a wireless fidelity (wireless fidelity, Wi-Fi) system, or the like; or may be a module or unit that completes some functions of a base station, for example, may be a central unit (central unit, CU) or a distributed unit (distributed unit, DU). The radio access network may be a macro base station, may be a micro base station or an indoor base station, or may be a relay node, a donor node, or the like. A specific technology and a specific device form that are used by the radio access network are not limited in embodiments of this application.

The terminal device may be user equipment (user equipment, UE), a mobile station, a mobile terminal, or the like. The terminal device may be widely used in various scenarios, for example, device-to-device (device-to-device, D2D), vehicle to everything (vehicle to everything, V2X) communication, machine-type communication (machine-type communication, MTC), Internet of things (Internet of things, IOT), virtual reality, augmented reality, industrial control, autonomous driving, telemedicine, a smart grid, smart furniture, a smart office, smart wearable, smart transportation, and a smart city. The terminal device may be a mobile phone, a tablet computer, a computer with a wireless transceiver function, a wearable device, a vehicle, an urban air transportation vehicle (like an unmanned aerial vehicle or a helicopter), a ship, a robot, a mechanical arm, a smart home device, or the like.

The core network includes some or all of the following NFs.

The AMF includes functions such as mobility management and access authentication/authorization. In addition, the AMF is responsible for transferring a user policy between the terminal device and the PCF.

The SMF includes functions such as session management, execution of a control policy delivered by the PCF, UPF selection, and Internet protocol (Internet protocol, IP) address allocation for the terminal device.

The UPF serves as an interface to the DN and includes functions such as user plane data forwarding, session/flow-level charging statistics collection, and bandwidth throttling.

The UDM includes functions such as subscription data management and user access authorization.

The UDR includes functions such as storage and retrieval of subscription data, policy data, application data, and other types of data.

The NEF is configured for capability supporting and event exposure.

The AF transfers a requirement of an application side for a network side, for example, a quality of service (quality of service, QoS) requirement, user status event subscription, or the like. The AF may be a third-party functional entity or an application server deployed by an operator.

The PCF includes policy control functions such as session-level or service flow-level charging, QoS bandwidth guarantee, mobility management, and terminal device policy decision-making.

The NWDAF is mainly configured to: collect data (including one or more of terminal device data, access network data, core network element data, and third-party application device data), where the data may be data of the terminal device, the access network, the core network element, or the third-party application device, or may be data of the terminal device on the access network, the core network element, or the third-party application device; and then perform data analysis based on the collected data to output a data analysis result.

The NSSF is configured to select a network slice for the terminal device.

The NRF may be configured to: provide a network element discovery function, and provide, based on a request of another network element, network element information corresponding to a network element type. The NRF further provides a network element management service, for example, network element registration, update, or deregistration, and network element status subscription and push.

Further, a service-oriented interface may be used for communication between the NFs in the core network to invoke a corresponding service-oriented operation. For example, a "subscription-notification" interaction mode is used between two NFs. The two NFs are respectively a service consumer and a service producer. The service consumer may subscribe to a service from the service producer, and the service producer may notify the service consumer of the corresponding service after a corresponding condition is met. In FIG. 2, the Npcf, Nnrf, Namf, Nsmf, Naf, Nnwdaf, Nnssf, and Nnef are service-oriented interfaces provided by the PCF, NRF, AMF, SMF, AF, NWDAF, NSSF, and NEF respectively.

In addition, the 5G network architecture may further include operation administration and maintenance (operation administration and maintenance, OAM) (not shown in FIG. 2). The OAM may be located in the core network (that is, a core network function), or may be located outside the core network. The OAM may be configured to manage the network slice and the NF in a communication network, and specifically includes network element management, fault monitoring, fault reporting, fault locating, fault rectification, and the like. For example, the OAM may establish a new network slice, and the OAM locally stores resource configuration information of the network slice and the NF.

The 5G network architecture may further include a CA (not shown in FIG. 2). The CA may be located in the core network (that is, the core network function), or may be located outside the core network. When the CA is located outside the core network, a dedicated certificate management function (certificate management function) may be defined in the core network. The certificate management function may be configured to: apply for a certificate corresponding to the NF from the CA on behalf of the NF, and forward the certificate issued by the CA to the NF. The certificate management function may interact with the CA via security edge protection proxies (security edge protection proxies, SEPP). Further, the CA is responsible for managing an entire life cycle of a public key, including issuing a certificate, defining a certificate validity period, and revoking the certificate. It should be noted that the CA may further include an RA, and the RA is configured to submit a certificate issuing request to the CA after obtaining and authenticating a user identity. The RA may be a function integrated into the CA, or may be deployed independently.

The DN is a network located outside an operator network. The operator network may access a plurality of DNs, and a plurality of services may be deployed on the DN, to provide services such as data and/or a voice for the terminal device. For example, the DN is a private network of a smart factory, a sensor mounted in a workshop of the smart factory may be a terminal device, a control server of the sensor is deployed in the DN, and the control server may serve the sensor. The sensor may communicate with the control server, to obtain instructions of the control server, transmit collected sensor data to the control server according to the instructions, and the like. For another example, the DN is an internal office network of a company, a mobile phone or a computer of an employee of the company may be a terminal device, and the mobile phone or the computer of the employee may access information, data resources, and the like in the internal office network of the company.

FIG. 2 further includes N1, N2, N3, N4, and N6 interfaces. Meanings of these interfaces are as follows:
(1) N1 is an interface between the AMF and the terminal device, and may be configured to transfer non-access stratum (non-access stratum, NAS) signaling (for example, including a QoS rule from the AMF) and the like to the terminal device.
(2) N2 is an interface between the AMF and the access network, and may be configured to transfer radio bearer control information that is from the core network to the access network and the like.
(3) N3 is an interface between the access network and the UPF, and is mainly configured to transfer uplink and downlink user plane data between the access network and the UPF.
(4) N4 is an interface between the SMF and the UPF, and may be configured to transfer information between a control plane and a user plane, including delivery of a forwarding rule, a QoS rule, a traffic statistics rule, and the like from the control plane to the user plane, and reporting of user plane information.
(5) N6 is an interface between the UPF and the DN, and is configured to transfer uplink and downlink user data flows between the UPF and the DN.

It may be understood that FIG. 2 is merely a diagram of a 5G network architecture to which this application is applicable. This application is further applicable to a future 6G network architecture. The 6G network architecture may be similar to the foregoing 5G network architecture. Names of the network elements or functions in the core network are specifically names in the 5G network architecture. The SMF is used as an example. In the 5G network architecture, a network element or function configured to perform session management is referred to as the SMF. In the future 6G network architecture, the network element or function may still be an SMF network element or have another name. This is not limited in this application.

Further, all of the NF, the CA, the certificate management function, and the OAM in this application may be considered as devices, network elements, or entities. To be specific, the NF may be specifically an NF device, an NF network element, or an NF entity, the CA may be specifically a CA device, a CA network element, or a CA entity, and the certificate management network element and the OAM are similar. Details are not described again. For ease of description, the NF, the CA, the certificate management function, and the OAM are used as an example for description below.

In a process in which the NF requests a certificate from the CA, or in a process in which the certificate management function requests a certificate from the CA, the certificate request message includes an instance identity of an NF by which the certificate is to be applied for. Further, the certificate request message is a PKI message, a format of the certificate request message conforms to a protocol message format of CMPv2, and the instance identity of the NF by which the certificate is to be applied for is included in a body field of the certificate request message. In addition, a protection field of the certificate request message includes a MAC or a signature that provides integrity protection for a header field and the body field of the certificate request message. Correspondingly, after receiving the certificate request message from the NF, the CA may perform integrity verification on the certificate request message based on the MAC or the signature in the protection field of the certificate request message, the header field, and the body field. After determining that integrity verification on the certificate request message succeeds, the CA generates a certificate for the NF based on the instance identity in the body field, and sends the generated certificate to the NF.

However, the CA only verifies integrity of the certificate request message, but does not verify whether the instance identity in the body field is a real instance identity of the message initiator NF. The message initiator NF may pretend to be another NF to request a certificate of the another NF from the CA. For example, an instance identity of an NF a is an instance identity a, and an instance identity of an NF b is an instance identity b. When the NF a sends the certificate request message to the CA as a message initiator, the certificate request message carries the instance identity b. In this case, the CA may generate a certificate b for the NF a, and correspondingly, the NF a may perform a corresponding operation by using the certificate b. In this way, the message initiator NF may perform a corresponding operation by using the certificate of the another NF, and there is a communication security problem.

Therefore, this application provides a communication method, so that a CA can verify whether an instance identity in a certificate request message is a real instance identity of a message initiator NF, to ensure communication security.

FIG. 3 is an example of a schematic flowchart of a communication method.

Step 301: An NF sends a certificate request message to a CA. Correspondingly, the CA receives the certificate request message from the NF.

A format of the certificate request message conforms to a protocol message format of CMPv2, and the certificate request message may be specifically a PKI message.

The certificate request message includes a first instance identity of the NF, indication information, and a signature.

The first instance identity is specifically an instance identity provided by the NF, and the certificate request message is used by the NF to request a certificate corresponding to the first instance identity from the CA. For example, the first instance identity is an ID 1, and the certificate request message is used by the NF to request a certificate corresponding to the ID 1 from the CA. The certificate may be specifically an Internet X.509 certificate. The first instance identity may be specifically carried in a certification template field of the certificate request message. Optionally, the certification template field of the certificate request message carries a certificate profile of the NF, the certificate profile includes a subject alternative name, and the subject alternative name further carries the first instance identity.

The indication information indicates that the certificate request message includes the signature. Further, the indication information may further indicate a location of the signature in the certificate request message.

The signature is a signature of a trusted function for a second instance identity of the NF (or a hash value of the second instance identity of the NF) according to a preset signature algorithm, and the signature may be preconfigured in the NF by the trusted function. The trusted function is specifically a function trusted by the CA. The trusted function may also be referred to as a trusted functional entity, a trusted function device, a trusted function network element, a trusted entity, a third-party function, a third-party entity, or the like. The trusted function is, for example, OAM. The second instance identity of the NF signed by the trusted function is an instance identity of the NF authenticated by the trusted function.

The first instance identity is the same as or different from the second instance identity. It may be understood that a real instance identity of the NF is the second instance identity. When the first instance identity carried by the NF is the same as the second instance identity, it indicates that the NF does not pretend to be another NF to request a certificate from the CA. Correspondingly, the CA may issue the certificate to the NF based on the first instance identity. When the instance identity carried by the NF is different from the second instance identity, it indicates that the NF pretends to be another NF to request a certificate from the CA. Correspondingly, the CA refuses to issue the certificate to the NF. For specific descriptions, refer to the following descriptions in step 302 and step 303.

Optionally, the certificate request message further includes a certificate of the trusted function. The certificate of the trusted function may be preconfigured in the NF. When sending the certificate request message to the CA, the NF carries the certificate of the trusted function in the certificate request message. The certificate of the trusted function may be specifically carried in an extra certificates field of the certificate request message.

In addition, certificate chain information may be further preconfigured in the NF. Correspondingly, the NF verifies the certificate of the trusted function based on the certificate chain information, and carries the certificate of the trusted function in the certificate request message after determining that verification on the certificate of the trusted function succeeds. For example, a CA 1 is a root CA, and a CA 2 is a subordinate CA of the CA 1. A certificate of the CA 1 is issued by the CA 1. The CA 1 may issue a certificate (that is, a certificate of the CA 2) to the subordinate CA (that is, the CA 2) of the CA 1 by using a private key corresponding to the certificate of the CA 1. Then, the CA 2 issues a certificate to the trusted function by using a private key corresponding to the certificate of the CA 2. In this case, the certificate chain information may be "the certificate of the CA 1 → the certificate of the CA 2 → the certificate of the trusted function", and the certificate chain information may be preconfigured in the NF. Correspondingly, the NF may first verify the certificate of the CA 2 based on "the certificate of the CA 1 → the certificate of the CA 2" in the certificate chain information and the certificate of the CA 1. After determining that verification on the certificate of the CA 2 succeeds, the CA verifies the certificate of the trusted function based on "the certificate of the CA 2 → the certificate of the trusted function" in the certificate chain information and the certificate of the CA 2. Further, after determining that verification on the certificate of the trusted function succeeds, the CA carries the certificate of the trusted function in the certificate request message. It may be understood that, when determining that any verification phase fails, the NF may determine that the certificate of the trusted function is an untrusted certificate, and the NF may request a certificate of the trusted function from the trusted function again. It may be further understood that, the certificate chain information is merely an example, and the certificate chain information may further include certificates of three, four, or more CAs. For example, the certificate chain information is "the certificate of the CA 1 → the certificate of the CA 2 → a certificate of a CA 3 → the certificate of the trusted function". This is not limited in this application.

The certificate request message may be specifically an initialization request (initialization request, ir) or a certification request (certification request, cr). The initialization request is used by the NF to apply for a certificate for the first time, and the certification request is used by the NF to request an additional certificate after the NF applies for the certificate for the first time. For example, the NF may apply to the CA for a plurality of certificates for different key usages, for example, transport layer security (transport layer security, TLS) server authentication, TLS client authentication, client credentials assertion (client credentials assertion, CCA) token issuing, and the like. For example, the NF sends the initialization request to the CA, where the initialization request includes an ID 1 and a key usage 1, and the initialization request is used by the NF to request, from the CA, a certificate 1 of an instance 1 corresponding to the key usage 1. Then, the NF sends a certification request to the CA, where the certification request includes the ID 1 and a key usage 2, and the certification request is used by the NF to request, from the CA, a certificate 2 of the instance 1 corresponding to the key usage 2. It is explained that, the NF is used as an end entity in a certificate application procedure. When applying for the certificate 1 for the instance 1, the NF has requested a certificate from the CA. Therefore, when the NF applies for the certificate 2 for the instance 1, it may be considered that the NF applies for a certificate from the CA for the second time. In other words, the NF sends the certification request instead of the initialization request.

In a possible example, the NF generates a public key of the NF and a private key corresponding to the public key, retains the private key of the NF, and generates the certificate request message based on the protocol message format of CMPv2. The certificate request message further includes the public key of the NF, and the public key of the NF may be specifically carried in a subject public key information (subject public key info) field.

Step 302: The CA performs verification based on the signature and the first instance identity of the NF.

In a specific implementation, the CA parses the certificate request message based on the protocol message format of CMPv2, to obtain the signature and the first instance identity from the certificate request message. Then, the CA performs verification based on the signature, the certificate of the trusted function, and the first instance identity. Specifically, the CA may perform verification based on the signature, the certificate of the trusted function, the first instance identity, and a preset verification algorithm corresponding to the preset signature algorithm, where the preset signature algorithm and the preset verification algorithm are pre-agreed on by the trusted function and the CA.

That the CA obtains the signature from the certificate request message may be specifically: The CA first obtains the indication information from the certificate request message, determines the location of the signature in the certificate request message based on the indication information, and then obtains the signature from the determined location.

That the CA obtains the first instance identity from the certificate request message may be specifically: The CA first obtains the certificate profile from the certification template field in the certificate request message, and then obtains the first instance identity from the certificate profile.

Further, the certificate of the trusted function may be carried in the certificate request message. Optionally, the certificate of the trusted function may be carried in the extra certificates field of the certificate request message. Correspondingly, the CA obtains the certificate of the trusted function from the extra certificates field of the certificate request message. Alternatively, the certificate of the trusted function may be preconfigured in the CA, and correspondingly, the CA obtains the certificate of the trusted function from a local pre-configuration.

In addition, the certificate chain information may be further preconfigured in the CA. For descriptions of the certificate chain information, refer to the foregoing descriptions in step 301. Correspondingly, the CA may verify the certificate of the trusted function based on the certificate chain information, and use the certificate of the trusted function after determining that verification on the certificate of the trusted function succeeds. In other words, the CA may perform verification based on the signature, the certificate of the trusted function, and the first instance identity.

In a first possible verification process, the signature is specifically a signature of the trusted function for the second instance identity based on a private key of the trusted function and the preset signature algorithm, where a public key corresponding to the private key of the trusted function is carried in the certificate of the trusted function. Correspondingly, the CA obtains the public key of the trusted function from the certificate of the trusted function, and inputs the public key, the signature, and the first instance identity into the preset verification algorithm. A verification result of the preset verification algorithm may indicate whether the verification succeeds.

For example, the preset signature algorithm is represented by sigvalue=sig (sk, message), where sk is the private key of the trusted function, message is the second instance identity, and sigvalue is the signature. Correspondingly, the preset verification algorithm is represented by V=verify (sigvalue, pk, message), where pk is the public key of the trusted function, and a verification result output according to the preset verification algorithm may indicate whether the verification succeeds, or may indicate whether the carried signature is a signature for the second instance identity. For example, the verification result V=1 indicates that the verification succeeds, and the CA determines, based on the verification result V=1, that the verification succeeds. V=0 indicates that the verification fails, and the CA determines, based on the verification result V=0, that the verification fails.

In a second possible verification process, the certificate request message not only includes the signature, but also includes a third instance identity. For a definition of the signature, refer to the descriptions in the first possible verification process. The third instance identity may be preconfigured in the NF by the trusted function. Optionally, the trusted function preconfigures the signature and the third instance identity in the NF via a configuration message.

In a possible example, the CA obtains the public key of the trusted function from the certificate of the trusted function, and inputs the public key of the trusted function, the signature, and the third instance identity into the preset verification algorithm. The verification result of the preset verification algorithm indicates whether the carried signature is a signature for the carried third instance identity. It may be understood that when the verification result of the preset verification algorithm indicates that the verification succeeds, the third instance identity carried in the certificate request message is the second instance identity signed by the trusted function. Further, the CA may obtain the first instance identity from the certificate request message. If it is determined that the first instance identity is the same as the third instance identity, the CA determines that the verification succeeds; or if it is determined that the first instance identity is different from the third instance identity, the CA determines that the verification fails. In addition, when the verification result of the preset verification algorithm indicates that the verification fails, the carried third instance identity is not the second instance identity signed by the trusted function, and the CA may directly reject the certificate request message of the NF without comparing whether the first instance identity is the same as the third instance identity.

In another possible example, the CA may first obtain the third instance identity and the first instance identity from the certificate request message, and compare whether the third instance identity is consistent with the first instance identity. Then, when determining that the third instance identity is consistent with the first instance identity, the CA obtains the public key of the trusted function from the certificate of the trusted function, and inputs the public key of the trusted function, the signature, and the third instance identity into the preset verification algorithm. The verification result of the preset verification algorithm indicates whether the carried signature is a signature for the carried third instance identity. When the verification result of the preset verification algorithm indicates that the verification succeeds, the third instance identity carried in the certificate request message is the second instance identity signed by the trusted function, and correspondingly, the CA determines that the verification succeeds. When the verification result of the preset verification algorithm indicates that the verification fails, the third instance identity carried in the certificate request message is not the second instance identity signed by the trusted function, and correspondingly, the CA determines that the verification fails, and may reject the certificate request message of the NF. In addition, when determining that the third instance identity is inconsistent with the first instance identity, the CA may directly reject the certificate request message of the NF without verifying whether the third instance identity carried in the certificate request message is the second instance identity signed by the trusted function. This helps improve verification efficiency of the CA.

It may be understood that when the CA performs verification based on the signature and the first instance identity of the NF, and determines that the verification succeeds, it may be considered that the first instance identity provided by the NF is the second instance identity authenticated by the trusted function. In other words, if the first instance identity is the same as the second instance identity, the CA may issue a certificate to the NF. For details, refer to step 303 below.

Step 303: When the verification succeeds, the CA sends a certificate of the NF to the NF. Correspondingly, the NF receives the certificate of the NF from the CA.

The first instance identity is an identity of a first instance in the NF, and the certificate of the NF is specifically a certificate of the first instance issued by the CA to the NF (or the first instance). In other words, when determining that the verification succeeds, the CA may generate the certificate for the first instance based on the first instance identity, and send the generated certificate of the first instance to the NF. Optionally, after receiving the certificate from the CA, the NF may send an acknowledgment (acknowledgement, ACK) to the CA.

Optionally, the CA sends a certificate request response to the NF, where the certificate request response includes the certificate of the NF. For example, the certificate request response is specifically an initialization response (initialization response, ip) corresponding to the initialization request, or the certificate request response is specifically a certification response (certification response, cp) corresponding to the certification request.

Optionally, when the CA determines, based on the signature and the first instance identity of the NF, that the verification fails, it may be considered that the first instance identity provided by the NF is not the second instance identity authenticated by the trusted function, that is, the first instance identity is different from the second instance identity. Alternatively, it is understood that the CA determines that the NF pretends to be another NF to request a certificate from the CA. For example, the CA may send a reject message to the NF, to reject the certificate request message of the NF.

In addition, the NF may further provide integrity protection for the certificate request message. Specifically, a header field of the certificate request message further includes an integrity protection algorithm, and the integrity protection algorithm is, for example, an MSG_SIG_ALG algorithm or an MSG_MAC_ALG algorithm. A protection field of the certificate request message further includes an integrity protection value. Correspondingly, the CA may first read the integrity protection algorithm from the header field of the certificate request message, read the integrity protection value from the protection field of the certificate request message, and then verify integrity of the certificate request message according to the integrity protection algorithm, the integrity protection value, and the header field and a body field of the certificate request message.

Optionally, the CA may first verify the integrity of the certificate request message, and after determining that integrity verification fails, the CA does not perform step 302. Alternatively, the CA may first perform step 302, and after determining that the verification in step 302 fails, the CA does not verify the integrity of the certificate request message. This helps reduce unnecessary calculation.

Further, after determining that the verification in step 302 succeeds and the integrity verification on the certificate request message succeeds, the CA sends the certificate of the NF to the NF; and after determining that the verification in step 302 fails or the integrity verification on the certificate request message fails, the CA sends the reject message to the NF, to reject the certificate request message of the NF.

In the foregoing technical solution, the certificate request message carries the signature of the trusted function for the second instance identity of the NF. Correspondingly, the CA may perform verification based on the signature and the first instance identity carried in the certificate request message, to ensure that an instance for requesting a certificate is an instance corresponding to the instance identity in the certificate request message, prevent the NF from pretending to be another NF to request a certificate from the CA, and provide protection for authenticity of an instance identity of the NF, to ensure communication security.

Further, the format of the certificate request message conforms to the protocol message format of CMPv2. An existing message format and usages of the fields do not need to be changed. Therefore, an implementation is simple.

Based on the protocol message format of CMPv2, this application provides four specific implementations of the procedure shown in FIG. 3.

In an implementation 1, the indication information is carried in a registration information field, and the signature is carried in a control field.

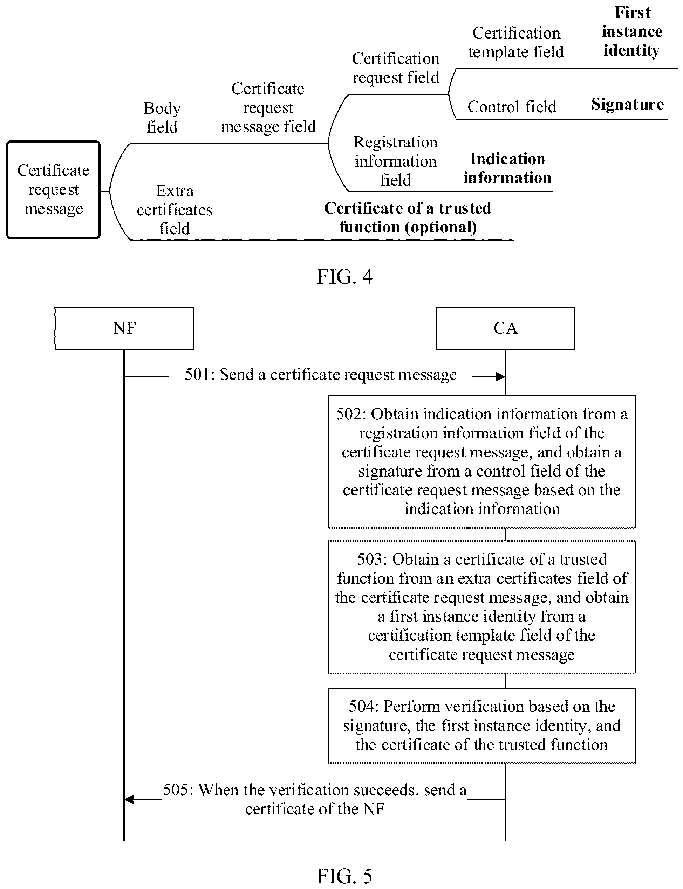

Refer to a diagram of a first format shown in FIG. 4. The certificate request message in the implementation 1 is first explained as follows:
The body field of the certificate request message includes a certificate request message field, and the certificate request message field includes the registration information field and a certification request field. The registration information field further includes the indication information. For example, the indication information is represented by Carry3rdPartySig. The certification request field further includes the control field, and the control field includes the signature.

A type of the control field may be a registration token type or an authenticator type. In other words, the signature may be located in a control field of the registration token type or a control field of the authenticator type.

In a possible example, the indication information carried in the registration information field may not only indicate that the certificate request message carries the signature, but also indicate a location of the signature in the certificate request message. For example, the indication information includes Carry3rdPartySig and controls.regToken. Carry3rdPartySig indicates that the certificate request message carries the signature, and controls.regToken indicates that the signature is located in the control field of the registration token type. For another example, the indication information includes Carry3rdPartySig and controls.authenticator. Carry3rdPartySig indicates that the certificate request message carries the signature, and controls.authenticator indicates that the signature is located in the control field of the authenticator type. In addition, in this application, a new type of the control field may be further defined to carry a signature. For example, the newly defined type of the control field is a signature token type (for example, 3rdPartySigToken), and the indication information includes Carry3rdPartySig and 3rdPartySigToken. Carry3rdPartySig indicates that the certificate request message carries the signature, and 3rdPartySigToken indicates that the signature is located in the control field of the signature token type.

The following provides examples of specific representation forms of the indication information.

In a representation form 1, the indication information explicitly indicates that the certificate request message carries the signature.

Example 1: The indication information is (Carry3rdPartySig, true), indicating that the certificate request message carries the signature.

Example 2: The indication information includes (Carry3rdPartySig, true) and (3rdPartySigLoc, controls.regToken). (Carry3rdPartySig, true) indicates that the certificate request message carries the signature, and (3rdPartySigLoc, controls.regToken) indicates that the signature is located in the control field of the registration token type.

Example 3: The indication information includes (Carry3rdPartySig, true) and (3rdPartySigLoc, controls.authenticator). (Carry3rdPartySig, true) indicates that the certificate request message carries the signature, and (3rdPartySigLoc, controls.authenticator) indicates that the signature is located in the control field of the registration authenticator type.

In a representation form 2, the indication information explicitly indicates the location of the signature in the certificate request message, to implicitly indicate that the certificate request message carries the signature.

Example 1: The indication information is (Carry3rdPartySig, controls.regToken), indicating that the certificate request message carries the signature and the signature is located in the control field of the registration token type.

Example 2: The indication information is (Carry3rdPartySig, controls.authenticator), indicating that the certificate request message carries the signature, and the signature is located in the control field of the authenticator type.

In addition, in this application, the indication information may indicate a type of control field in which the signature is carried, and the CA and the NF may agree in advance on a type of control field in which the signature is carried. For example, if the CA and the NF agree in advance that the signature is carried in the control field of the registration token type, the NF may directly include the signature in the control field of the registration token type. For another example, if the CA and the NF agree in advance that the signature is carried in the control field of the authenticator type, the NF may directly include the signature in the control field of the authenticator type. Correspondingly, the indication information may indicate that the certificate request message carries the signature. For example, the indication information may be Carry3rdPartySig or (Carry3rdPartySig, true).

In addition, this application further includes: The trusted function and the CA do not agree on a signature algorithm and a verification algorithm in advance. In this case, the certificate request message may further carry a signature algorithm used by the trusted function to sign the second instance identity. Correspondingly, the CA may learn, from the certificate request message, the signature algorithm used by the trusted function, and determine the verification algorithm according to the signature algorithm. For example, when the signature algorithm used by the trusted function to sign the second instance identity is an elliptic curve digital signature algorithm (elliptic curve digital signature algorithm, ECDSA), the trusted function may include the signature algorithm ECDSA in the certificate request message. Optionally, a representation form of the signature algorithm ECDSA is, for example, (3rdPartySigAlg, ECDSA). Correspondingly, the CA learns, from the certificate request message, that the signature algorithm used by the trusted function is the ECDSA, and then determines the verification algorithm according to the signature algorithm ECDSA.

In addition, the certification template field of the certificate request message includes the first instance identity. Optionally, the extra certificates field of the certificate request message includes the certificate of the trusted function.

Based on the diagram of the first format of the certificate request message shown in FIG. 4, FIG. 5 is a schematic flowchart of a corresponding communication method according to an example of this application. The communication method related to FIG. 5 is a specific implementation of the communication method related to FIG. 3. For content that is not described in detail in FIG. 5, refer to the descriptions of the communication method related to FIG. 3.

Step 501: The NF sends the certificate request message to the CA. Correspondingly, the CA receives the certificate request message from the NF.

For descriptions of the certificate request message, refer to the descriptions in the embodiment related to FIG. 4 and the descriptions in step 301.

Further, when the NF includes the signature in the control field of the registration token type, the NF may request a certificate from the CA once; or when the NF includes the signature in the control field of the authenticator type, the NF may request a certificate from the CA for a plurality of times.

Step 502: The CA obtains the indication information from the registration information field of the certificate request message, and obtains the signature from the control field of the certificate request message based on the indication information.

For example, the indication information includes Carry3rdPartySig and controls.regToken, and the CA may obtain the signature from the control field of the registration token type based on the indication information. Alternatively, the indication information includes Carry3rdPartySig and controls.authenticator, and the CA may obtain the signature from the control field of the authenticator type based on the indication information. Alternatively, the indication information includes Carry3rdPartySig and 3rdPartySigToken, and the CA may obtain the signature from a control field of a newly defined type (that is, a signature token type) based on the indication information.

Alternatively, the CA and the NF agree in advance on a type of control field in which the signature is carried. For example, if the CA and the NF agree in advance that the signature is carried in the control field of the registration token type, after reading the indication information, the CA obtains the signature from the control field of the registration token type. For another example, if the CA and the NF agree in advance that the signature is carried in the control field of the authenticator type, after reading the indication information, the CA obtains the signature from the control field of the authenticator type.

Step 503: The CA obtains the certificate of the trusted function from the extra certificates field of the certificate request message, and obtains the first instance identity from the certification template field of the certificate request message.

In addition, when the certificate of the trusted function is preconfigured in the CA, the CA may directly obtain the certificate of the trusted function from a pre-configuration of the CA. Correspondingly, the extra certificates field of the certificate request message may not carry the certificate of the trusted function.

Step 504: The CA performs verification based on the signature, the first instance identity, and the certificate of the trusted function.

For a specific implementation, refer to the descriptions in step 302.

Step 505: When the verification succeeds, the CA sends the certificate of the NF to the NF. Correspondingly, the NF receives the certificate of the NF from the CA. For a specific implementation, refer to the descriptions in step 303.

In the foregoing technical solution, the NF may indicate, to the CA by including the indication information in the registration information field of the certificate request message, that the certificate request message further carries the signature of the trusted function for the second instance identity of the NF. In this way, the CA can distinguish the certificate request message from another certificate request message that does not carry the signature of the trusted function to perform different processing. Optionally, the CA may further determine, based on the indication information, a location at which the signature is carried in the certificate request message, and extract the signature from the determined location. In this way, the CA can quickly obtain the signature. This helps improve verification efficiency of the CA.

In an implementation 2, the indication information is carried in a protection algorithm field, and the signature is carried in a protection field.

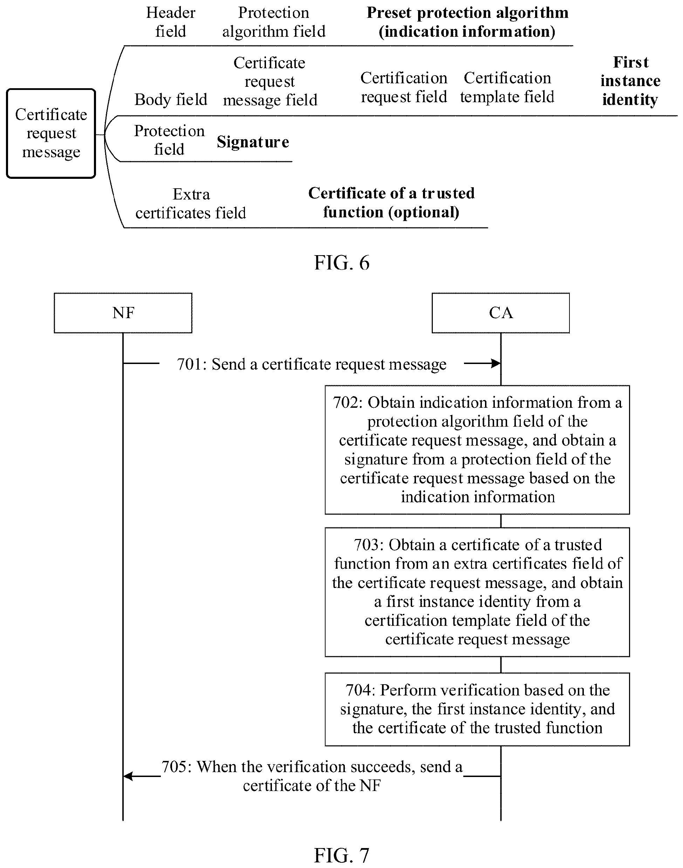

Refer to a diagram of a second format shown in FIG. 6. The certificate request message in the implementation 2 is first explained as follows:
The header field of the certificate request message includes the protection algorithm field, and the protection algorithm field includes the indication information. The protection field of the certificate request message includes the signature. In a possible example, the indication information is a preset protection algorithm. When the protection algorithm field includes the preset protection algorithm, the preset protection algorithm may indicate the NF to use the signature of the trusted function for protection, may indicate the NF to use the signature of the trusted function to protect the second instance identity, or may indicate the NF to use the signature of the trusted function to protect authenticity of an instance identity included by the NF in the certificate request message. For example, the preset protection algorithm may be a 3rd-MSG_SIG_ALG algorithm.

When the NF further provides integrity protection for the certificate request message, the protection algorithm field not only includes the preset protection algorithm, but also includes an integrity protection algorithm. Correspondingly, the protection field not only includes a signature, but also includes an integrity protection value. The integrity protection value may be specifically a MAC or a signature. For details, refer to related explanations in the foregoing technical terms. Herein, to distinguish a signature corresponding to the preset protection algorithm from a signature corresponding to the integrity protection algorithm, the signature corresponding to the preset protection algorithm may be referred to as a trusted function signature (or a third-party signature), and the signature corresponding to the integrity protection algorithm may be referred to as an integrity protection signature. For example, the protection algorithm field includes the 3rd-MSG_SIG_ALG algorithm and the MSG_SIG_ALG algorithm, and correspondingly, the protection field includes the trusted function signature and the integrity protection signature. For another example, the protection algorithm field includes the 3rd-MSG_SIG_ALG algorithm and the MSG_MAC_ALG algorithm, and correspondingly, the protection field includes the trusted function signature and the MAC.

In addition, the certification template field of the certificate request message includes the first instance identity. Optionally, the extra certificates field of the certificate request message includes the certificate of the trusted function.

Based on the diagram of the second format of the certificate request message shown in FIG. 6, FIG. 7 is a schematic flowchart of a corresponding communication method according to an example of this application. The communication method related to FIG. 7 is a specific implementation of the communication method related to FIG. 3. For content that is not described in detail in FIG. 7, refer to the descriptions of the communication method related to FIG. 3 or FIG. 5.

Step 701: The NF sends the certificate request message to the CA. Correspondingly, the CA receives the certificate request message from the NF.

For descriptions of the certificate request message, refer to the descriptions in the embodiment related to FIG. 6 and the descriptions in step 301.

Step 702: The CA obtains the indication information from the protection algorithm field of the certificate request message, and obtains the signature from the protection field of the certificate request message based on the indication information.

Specifically, the CA first reads the indication information (that is, the preset protection algorithm) from the protection algorithm field of the certificate request message, and then determines that in the protection field of the certificate request message, protection is provided by using the trusted function signature currently. Then, the CA reads the signature from the protection field of the certificate request message based on the indication information.

Step 703: The CA obtains the certificate of the trusted function from the extra certificates field of the certificate request message, and obtains the first instance identity from the certification template field of the certificate request message.

For a specific implementation, refer to the descriptions in step 503.

Step 704: The CA performs verification based on the signature, the first instance identity, and the certificate of the trusted function.

For a specific implementation, refer to the descriptions in step 302.

Step 705: When the verification succeeds, the CA sends the certificate of the NF to the NF. Correspondingly, the NF receives the certificate of the NF from the CA. For a specific implementation, refer to the descriptions in step 303.

In the foregoing technical solution, the NF may indicate, to the CA by including the preset protection algorithm (that is, the indication information) in the protection algorithm field of the certificate request message, that in the protection field of the certificate request message, the instance identity of the NF is protected by using the signature, that is, indicate that the certificate request message further carries the signature of the trusted function. Correspondingly, the CA can quickly obtain the signature from the protection field of the certificate request message. This helps improve verification efficiency of the CA. In addition, a current default integrity protection mechanism of CMPv2 is reused. In this way, the existing message format and the usages of the fields do not need to be changed, and the location at which the signature is carried in the certificate request message does not need to be preconfigured or indicated. Therefore, an implementation is simple.

In an implementation 3, in the header field, the indication information occupies an information type field, and the signature occupies an information value field corresponding to the information type field.

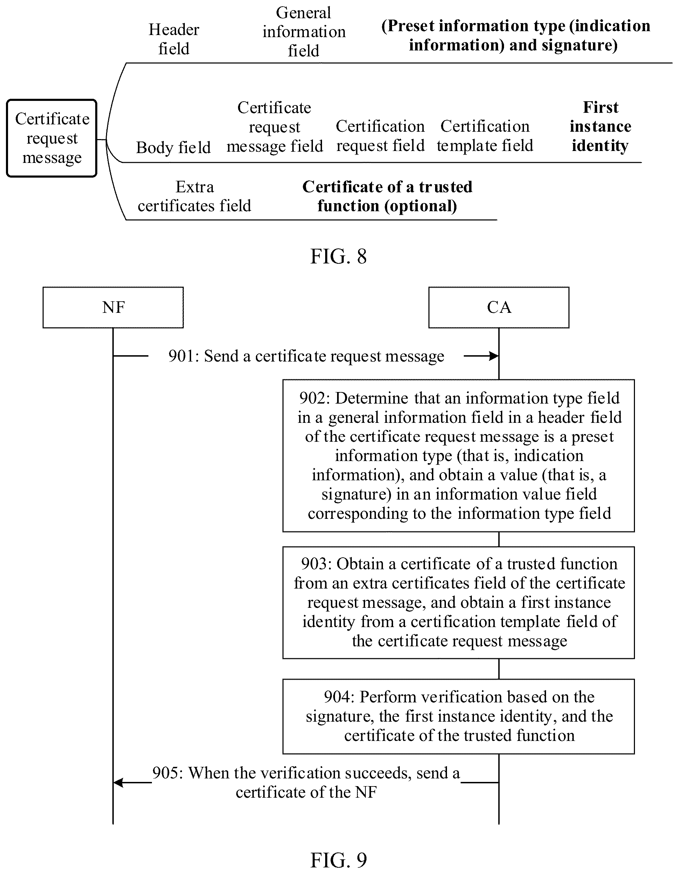

Refer to a diagram of a third format shown in FIG. 8. The certificate request message in the implementation 3 is first explained as follows:

The header field of the certificate request message includes a general information field, and the general information field includes an information type field and an information value field corresponding to the information type field. When a value of the information type field is a preset information type, the information type field may be used as indication information to indicate that a value of the information value field corresponding to the information type field is a signature. For example, the general information field is represented by (preset information type, signature). The preset information type may be a newly defined type, for example, {id-it 17}.

In addition, the certification template field of the certificate request message includes the first instance identity. Optionally, the extra certificates field of the certificate request message includes the certificate of the trusted function.

Based on the diagram of the third format of the certificate request message shown in FIG. 8, FIG. 9 is a schematic flowchart of a corresponding communication method according to an example of this application. The communication method related to FIG. 9 is a specific implementation of the communication method related to FIG. 3. For content that is not described in detail in FIG. 9, refer to the descriptions of the communication method related to FIG. 3 or FIG. 5.

Step 901: The NF sends the certificate request message to the CA. Correspondingly, the CA receives the certificate request message from the NF.

For descriptions of the certificate request message, refer to the descriptions in the embodiment related to FIG. 8 and the descriptions in step 301.

Step 902: The CA determines that the information type field in the general information field in the header field of the certificate request message is the preset information type (that is, the indication information), and obtains the value (that is, the signature) in the information value field corresponding to the information type field.

Specifically, the CA parses the certificate request message, determines, from the general information field in the header field, that the information type field is the preset information type (that is, the indication information, for example, {id-it 17}), and therefore determines that the value in the information value field corresponding to the information type field is the signature of the trusted function for the second instance identity. The CA obtains the signature from the information value field corresponding to the information type field.

Step 903: The CA obtains the certificate of the trusted function from the extra certificates field of the certificate request message, and obtains the first instance identity from the certification template field of the certificate request message.

For a specific implementation, refer to the descriptions in step 503.

Step 904: The CA performs verification based on the signature, the first instance identity, and the certificate of the trusted function.

For a specific implementation, refer to the descriptions in step 302.

Step 905: When the verification succeeds, the CA sends the certificate of the NF to the NF. Correspondingly, the NF receives the certificate of the NF from the CA. For a specific implementation, refer to the descriptions in step 303.

In the foregoing technical solution, the preset information type is defined, so that the preset information type may be used as the indication information to indicate that the value in the information value field corresponding to the information type field is the signature of the trusted function for the second instance identity. Therefore, the existing message format and the usages of the fields do not need to be changed, and the location at which the signature is carried does not need to be separately indicated. Therefore, an implementation is simple. In addition, after obtaining the preset information type from the general information field in the certificate request message, the CA may determine that the certificate request message further carries the signature. Further, the CA determines that the signature is located in a field corresponding to the preset information type. In this way, the CA can quickly obtain the signature. This helps improve verification efficiency of the CA.

In an implementation 4, an original message is nested in the certificate request message, the indication information is carried in a protection algorithm field of the original message, and the signature is carried in a protection field of the original message.

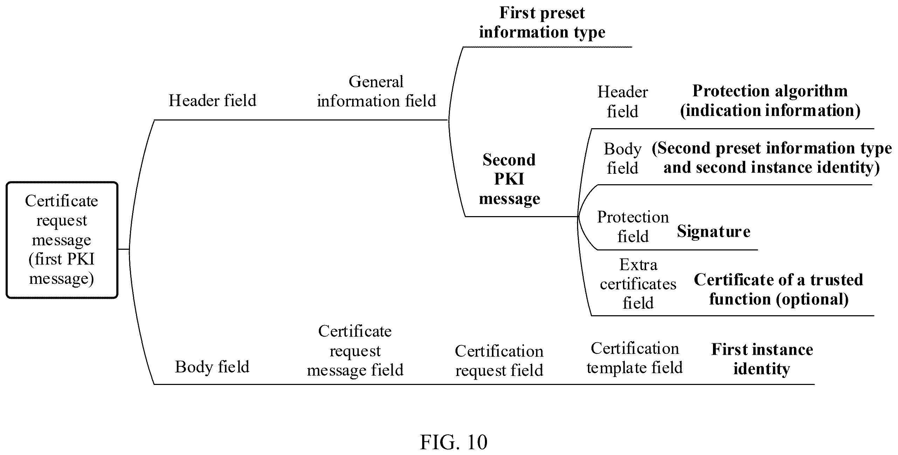

Refer to a diagram of a fourth format shown in FIG. 10. The certificate request message in the implementation 4 is first explained as follows:

The certificate request message may be denoted as a first PKI message, and the original message nested in the certificate request message is denoted as a second PKI message. Optionally, the second PKI message is from the trusted function.

Further, a header field of the first PKI message includes a general information field, a value of an information type field in the general information field is a first preset information type, and the first preset information type indicates that a value of an information value field corresponding to the information type field is the second PKI message. In other words, the first preset information type indicates that the second PKI message is nested in the first PKI message. The first preset information type is specifically {id-it 15}. A certification template field of a body field of the first PKI message includes the first instance identity.

A value of an information type field in a body field of the second PKI message is a second preset information type, and the second preset information type indicates that a value of an information value field corresponding to the information type field is the second instance identity. It may be understood that the second preset information type and the second instance identity form a general message (general message, genm) in the body field of the second PKI message, and the second preset information type is, for example, {id-it 18}. A header field of the second PKI message includes a protection algorithm field, the protection algorithm field carries an integrity protection algorithm, the integrity protection algorithm is used as the indication information to indicate that a protection field of the second PKI message includes a signature, and the signature is specifically a signature of the trusted function for the header field and the body field of the second PKI message according to the integrity protection algorithm. Alternatively, it is understood that the signature is specifically a signature of the trusted function for the second instance identity in the body field of the second PKI message according to the integrity protection algorithm. The integrity protection algorithm is, for example, the MSG_SIG_ALG algorithm. Optionally, an extra certificates field of the second PKI message includes the certificate of the trusted function.

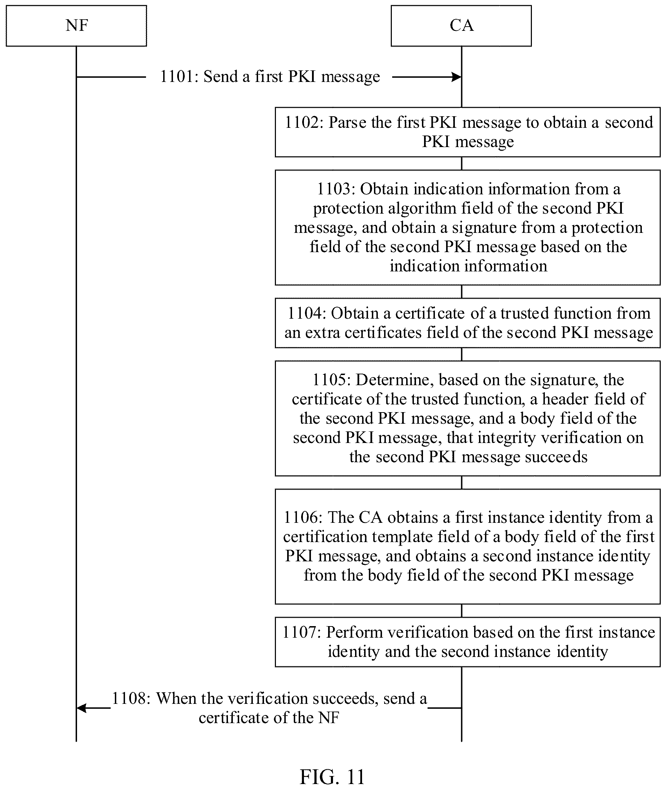

Based on the diagram of the fourth format of the certificate request message shown in FIG. 10, FIG. 11 is a schematic flowchart of a corresponding communication method according to an example of this application. The communication method related to FIG. 11 is a specific implementation of the communication method related to FIG. 3. For content that is not described in detail in FIG. 11, refer to the descriptions of the communication method related to FIG. 3.

Step 1101: The NF sends the first PKI message to the CA. Correspondingly, the CA receives the first PKI message from the NF.

For descriptions of the first PKI message, refer to the descriptions in the embodiment related to FIG. 10 and the descriptions in step 301.

Optionally, before step 1101, the trusted function includes the second preset information type and the second instance identity corresponding to the second preset information type in the body field of the second PKI message, and includes the integrity protection algorithm in the header field of the second PKI message. Then, the trusted function signs the body field and the header field of the second PKI message according to the integrity protection algorithm and a private key corresponding to the certificate of the trusted function, and includes an obtained signature in the protection field of the second PKI message. Further, the trusted function generates the second PKI message, and sends the second PKI message to the NF. For descriptions of the second PKI message, refer to the descriptions in the embodiment related to FIG. 10.

Correspondingly, after receiving the second PKI message from the trusted function, the NF generates the first PKI message based on the second PKI message. Optionally, that the NF generates the first PKI message may be specifically: The NF nests the second PKI message in the first PKI message. For example, the NF includes the first preset information type and the second PKI message corresponding to the first preset information type in the general information field in a header field of the first PKI message.

Step 1102: The CA parses the first PKI message to obtain the second PKI message.

Specifically, the CA parses the general information field in the header field of the first PKI message, reads the first preset information type from the general information field, determines that the value of the information value field indicated by the first preset information type is the second PKI message, and further extracts the second PKI message.

Step 1103: The CA obtains the indication information from a protection algorithm field of the second PKI message, and obtains the signature from the protection field of the second PKI message based on the indication information.

Specifically, the CA first reads the indication information (that is, the integrity protection algorithm) from the protection algorithm field of the second PKI message, and then determines that in the protection field of the certificate request message, integrity of the second PKI message is protected by using the trusted function signature currently. Then, the CA reads the signature from the protection field of the certificate request message based on the indication information.

Step 1104: The CA obtains the certificate of the trusted function from the extra certificates field of the second PKI message.

Herein, when the certificate of the trusted function is preconfigured in the CA, the CA may directly obtain the certificate of the trusted function from a pre-configuration of the CA. Correspondingly, the extra certificates field of the second PKI message may not carry the certificate of the trusted function.

Alternatively, in another possible manner, the NF includes the certificate of the trusted function in an extra certificates field of the first PKI message, and the CA obtains the certificate of the trusted function from the extra certificates field of the first PKI message. Correspondingly, the extra certificates field of the second PKI message may not carry the certificate of the trusted function.

Step 1105: The CA determines, based on the signature, the certificate of the trusted function, the header field of the second PKI message, and the body field of the second PKI message, that integrity verification on the second PKI message succeeds.

The CA extracts the public key of the trusted function from the obtained certificate of the trusted function, obtains, from the protection field of the second PKI message, the integrity protection value generated when the trusted function provides integrity protection for the header field and the body field of the second PKI message, and then inputs the public key of the trusted function, the integrity protection value, and the header field and the body field of the second PKI message into an integrity verification algorithm corresponding to the integrity protection algorithm. Correspondingly, the integrity verification algorithm outputs an integrity verification result, and the integrity verification result indicates whether the integrity verification on the second PKI message succeeds.

It may be understood that if the CA determines that the integrity verification on the second PKI message succeeds, the CA determines that the second PKI message is not tampered with, that is, an instance identity in the body field of the second PKI message is the second instance identity, that is, a real instance identity of the NF, included by the trusted function in the body field of the second PKI message.

In addition, when the CA determines, based on the signature, the certificate of the trusted function, the header field of the second PKI message, and the body field (including the second instance identity) of the second PKI message, that the integrity verification on the second PKI message fails, the CA does not need to continue to perform step 1106 to step 1108 below.

Step 1106: The CA obtains the first instance identity from the certification template field of the body field of the first PKI message, and obtains the second instance identity from the body field of the second PKI message.

Step 1107: The CA performs verification based on the first instance identity and the second instance identity.

Specifically, when determining that the first instance identity is the same as the second instance identity, the CA determines that the verification succeeds, and continues to perform step 1108 below; or when determining that the first instance identity is different from the second instance identity, the CA determines that the verification fails.

Step 1108: The CA sends the certificate of the NF to the NF. Correspondingly, the NF receives the certificate of the NF from the CA. For a specific implementation, refer to the descriptions in step 303.

It may be understood that step 1105 and step 1107 are a process in which the CA performs verification based on the signature, the first instance identity, and the certificate of the trusted function, that is, a specific implementation of step 302.

In the foregoing technical solution, compared with an existing implementation in which the second instance identity is not carried in the body field of the second PKI message, in this application, the second instance identity in the body field of the second PKI message is signed according to the integrity protection algorithm, that is, integrity protection is implemented on the second instance identity by using the signature, so as to ensure that an instance identity carried in the body field of the second PKI message is the second instance identity, so that after performing the integrity verification on the second PKI message, the CA verifies the first instance identity in the certification template field of the first PKI message by using the second instance identity. Further, the trusted function does not need to configure a signature for the NF in advance, that is, the trusted function can generate a signature online in real time. This is more flexible.

It should be supplemented that, in all of the foregoing embodiments related to FIG. 3 to FIG. 11, the NF includes the first instance identity in the certificate request message. Correspondingly, the CA performs verification based on the first instance identity in the certificate request message and the signature, that is, verifies whether the first instance identity carried in the certificate request message is the second instance identity signed by the trusted function. Further, an instance identity is a parameter in a certificate profile. In addition to the instance identity, the certificate profile may further include other parameters, such as a certificate validity period, a certificate usage, and a subject domain name. In a possible manner, the trusted function signs N second parameters in a real certificate profile of the NF, and the NF may include the signature and N first parameters of the NF in the certificate request message. Correspondingly, the CA performs verification based on the N first parameters of the NF and the signature that are carried in the certificate request message. After determining that the authentication succeeds, the CA issues a certificate to the NF based on the N first parameters of the NF that are carried in the certificate request message. N is a positive integer greater than 1.

It may be understood that the N first parameters of the NF that are carried in the certificate request message and the N second parameters of the NF that are signed by the trusted function are parameters of a same type, but values of the N first parameters are the same as or different from those of the N second parameters. For example, N=4. Four first parameters of the NF that are included in the certificate request message are respectively an instance identity (ID 1), a certificate validity period (1 year), a certificate usage (key usage 1), and a subject domain name (Subject DN 1), and four second parameters of the NF that are signed by the trusted function are respectively an instance identity (ID 2), a certificate validity period (1 year), a certificate usage (key usage 2), and a subject domain name (Subject DN 2).

For a specific implementation of this embodiment, refer to the descriptions in the embodiments related to FIG. 3 to FIG. 11. The "first instance identity" may be replaced with the "N first parameters", and the "second instance identity" may be replaced with the "N second parameters".

In a possible manner, the trusted function and the CA may negotiate types of N parameters and a sequence of the N parameters in advance, so that when receiving the certificate request message from the NF, the CA may first obtain the certificate profile from the certification template field of the certificate request message, and then obtain the N first parameters from the certificate profile. Then, the CA performs verification based on the signature in the certificate request message and the N first parameters.

In another possible manner, after signing the N second parameters sequentially arranged, the trusted function configures, together in the NF, the signature and types of the N second parameters sequentially arranged. Correspondingly, when sending the certificate request message to the CA, the NF may include, in a same field, the signature and the types of the N second parameters sequentially arranged. Specifically, in the foregoing implementation 1, the signature and the types of the N second parameters sequentially arranged are carried in the control field; in the foregoing implementation 2, the signature and the types of the N second parameters sequentially arranged are carried in the protection field; in the foregoing implementation 3, the signature and the types of the N second parameters sequentially arranged are carried in the information value field corresponding to the information type field; and in the foregoing implementation 4, the signature and the types of the N second parameters sequentially arranged are carried in the protection field of the original message. After receiving the certificate request message, the CA may first obtain the certificate profile from the certification template field of the certificate request message, and then obtain, from the certificate profile based on the types of the N second parameters sequentially arranged, the N first parameters sequentially arranged. Then, the CA performs verification based on the signature in the certificate request message and the N first parameters sequentially arranged.

According to the foregoing technical solution, when an NF pretends to be another NF to request a certificate from a CA, or when an NF forges a parameter to request a certificate from a CA, the CA can determine that N first parameters of the NF that are carried in a certificate request message are not N second parameters signed by a trusted function (that is, the N first parameters are not parameters in a real certificate profile of the NF), and therefore refuse to issue a certificate to the NF. In other words, it can be ensured that the N first parameters of the NF that are carried in the certificate request message are parameters in the real certificate profile of the NF. This helps ensure communication security.

It should be further supplemented that, in all of the foregoing embodiments related to FIG. 3 to FIG. 11, the NF directly sends the certificate request message to the CA, that is, the NF directly requests a certificate from the CA. This manner is mainly applicable to the architecture in FIG. 1a.

In addition, this application further provides a first communication method applicable to the architecture shown in FIG. 1b. A difference between the communication method and the embodiments related to FIG. 3 to FIG. 11 lies in that all messages transferred between an NF and a CA are forwarded by a certificate management function. Specifically, in step 301, step 501, step 701, step 901, and step 1101, the NF sends a certificate request message to the certificate management function; the certificate management function receives the certificate request message from the NF, and forwards the certificate request message to the CA; and the CA receives the certificate request message from the certificate management function. In step 303, step 505, step 705, step 905, and step 1108, the CA sends a certificate of the NF to the certificate management function; the certificate management function receives the certificate of the NF from the CA, and forwards the certificate of the NF to the NF; and the NF receives the certificate of the NF from the certificate management function.

This application further provides a second communication method applicable to the architecture shown in FIG. 1b. In the communication method, a certificate management function may replace an NF to request a certificate of the NF from a CA. For details, refer to the descriptions in the embodiments related to FIG. 3 to FIG. 11. For example, the certificate management function sends a certificate request message to the CA, where the certificate request message includes indication information, a first instance identity of the NF, and a signature, the indication information indicates that the certificate request message includes the signature, and the signature is a signature of a trusted function for a second instance identity of the NF. Correspondingly, after receiving the certificate request message from the certificate management function, the CA generates a certificate for the NF, and sends the certificate to the certificate management network element. The certificate management function receives the certificate of the NF from the CA and then sends the certificate of the NF to the NF. Optionally, before sending the certificate request message to the CA, the certificate management function may first obtain a certificate profile of the NF, a first instance identity of the NF, or a plurality of first parameters of the NF from the NF; and the certificate management function first obtains a signature of the trusted function from the trusted function. Optionally, the certificate management function further obtains types of a plurality of second parameters sequentially arranged and/or a certificate of the trusted function from the trusted function.

In this application, the certificate management function and the trusted function may be deployed on different functional entities or a same functional entity (for example, both are deployed on OAM).

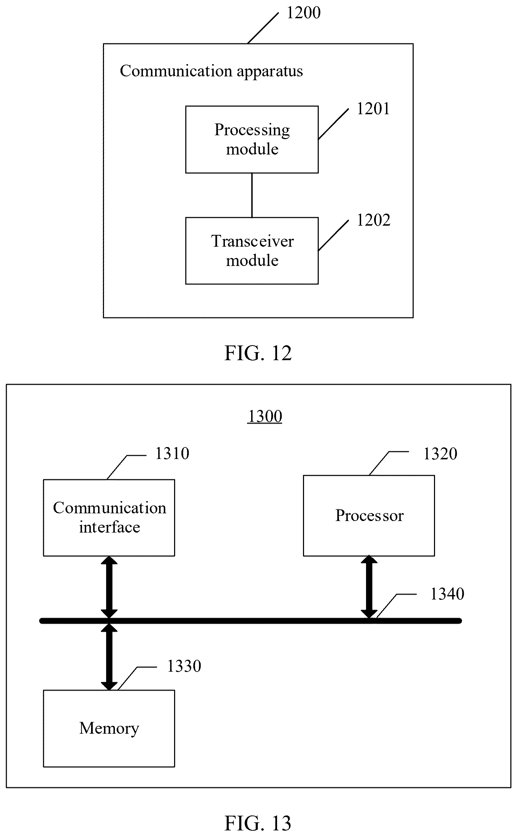

Based on the foregoing content and a same concept, FIG. 12 and FIG. 13 are diagrams of structures of possible communication apparatuses according to this application. These communication apparatuses may be configured to implement the method related to the NF, the CA, or the certificate management function in the foregoing method embodiments, and therefore can also implement beneficial effects of the foregoing method embodiments.

The communication apparatus 1200 includes a processing module 1201 and a transceiver module 1202. The processing module is configured to support the communication apparatus 1200 in performing a corresponding function in the foregoing method embodiments. The transceiver module is configured to support communication between the communication apparatus 1200 and another communication device. For example, when the apparatus is an NF, the apparatus may send a certificate request message to a CA. The communication apparatus may further include a storage module. The storage module is coupled to the processing module 1201, and stores program code instructions and data that are necessary for the communication apparatus 1200.

For example, the communication apparatus 1200 is configured to implement a function of the CA in the foregoing method embodiments.

In this case, the transceiver module 1202 is configured to receive a certificate request message, where the certificate request message includes indication information, a first instance identity of the NF, and a signature, the indication information indicates that the certificate request message includes the signature, and the signature is a signature of a trusted function for a second instance identity of the NF. The processing module 1201 is configured to perform verification based on the signature and the first instance identity of the NF. When the verification succeeds, the transceiver module 1202 is further configured to send a certificate of the NF.

In a possible implementation, when performing verification based on the signature and the first instance identity of the NF, the processing module 1201 is specifically configured to perform verification based on the signature, the certificate of the trusted function, and the first instance identity.

In a possible implementation, when performing verification based on the signature and the first instance identity of the NF, the processing module 1201 is specifically configured to: determine, based on the signature, the certificate of the trusted function, a header field of a second PKI message, and a body field of the second PKI message, that integrity verification on the second PKI message succeeds; and determine, based on the second instance identity of the NF in the body field of the second PKI message and the first instance identity of the NF in the certification template field of the body field of the first PKI message, that the verification succeeds.

For example, the communication apparatus 1200 is configured to implement a function of the NF or the certificate management function in the foregoing method embodiments.

In this case, the transceiver module 1202 is configured to: send a certificate request message to the CA, where the certificate request message includes indication information, a first instance identity of the NF, and a signature, the indication information indicates that the certificate request message includes the signature, and the signature is a signature of a trusted function for a second instance identity of the NF; and receive a certificate of the NF from the CA. Optionally, the signature and the first instance identity of the NF are used for verification. Optionally, when the verification based on the signature and the first instance identity of the NF succeeds, the NF receives the certificate of the NF from the CA.

In a possible implementation, before sending the certificate request message to the CA, the transceiver module 1202 further receives a second PKI message from the trusted function; and the processing module 1201 is configured to generate a first PKI message based on the second PKI message.

Division into the modules in embodiments of this application is an example, is merely division into logical functions, and may be other division during actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software function module.

FIG. 13 shows an apparatus 1300 according to an embodiment of this application. The apparatus shown in FIG. 13 may be an implementation of a hardware circuit of the apparatus shown in FIG. 12. The apparatus is applicable to the flowcharts shown above, and performs the method related to the CA, the NF, or the certificate management function in the foregoing method embodiments.

For ease of description, FIG. 13 shows only main components of the apparatus.

The apparatus 1300 shown in FIG. 13 includes a communication interface 1310, a processor 1320, and a memory 1330. The memory 1330 is configured to store program code instructions and/or data. The processor 1320 may cooperate with the memory 1330. The processor 1320 may execute the program code instructions stored in the memory 1330. When the instructions or the program stored in the memory 1330 are/is executed, the processor 1320 is configured to perform an operation performed by the processing module 1201 in the foregoing embodiment, and the communication interface 1310 is configured to perform an operation performed by the transceiver module 1202 in the foregoing embodiment.

The memory 1330 is coupled to the processor 1320. The coupling in embodiments of this application may be an indirect coupling or a communication connection between apparatuses, units, or modules in an electrical form, a mechanical form, or another form, and is used for information exchange between the apparatuses, the units, or the modules. At least one of the memories 1330 may be included in the processor 1320.

In embodiments of this application, the communication interface may be a transceiver, a circuit, a bus, a module, or a communication interface of another type. In embodiments of this application, when the communication interface is the transceiver, the transceiver may include an independent receiver and an independent transmitter, or may be a transceiver integrated with a transceiver function or a communication interface.

The apparatus 1300 may further include a communication line 1340. The communication interface 1310, the processor 1320, and the memory 1330 may be connected to each other through the communication line 1340. The communication line 1340 may be a peripheral component interconnect (peripheral component interconnect, PCI for short) bus, an extended industry standard architecture (extended industry standard architecture, EISA for short) bus, or the like. The communication line 1340 may be classified into an address bus, a data bus, a control bus, and the like. For ease of representation, only one bold line is used to represent the communication line in FIG. 13, but this does not mean that there is only one bus or only one type of bus.

Based on the foregoing content and a same concept, this application provides a computer-readable storage medium. The storage medium stores a computer program or instructions. When the computer program or the instructions is/are executed by a communication apparatus, the method in the foregoing method embodiments, the method of the CA in the foregoing method embodiments, the method of the NF in the foregoing method embodiments, or the method of the certificate management function in the foregoing method embodiments is implemented.

Based on the foregoing content and a same concept, this application provides a computer program product. The computer program product includes a computer program or instructions. When the computer program or the instructions is/are executed by a communication apparatus, the method in the foregoing method embodiments, the method of the CA in the foregoing method embodiments, the method of the NF in the foregoing method embodiments, or the method of the certificate management function in the foregoing method embodiments is implemented.

Based on the foregoing content and a same concept, this application provides a chip system, including a processor. The processor is coupled to a memory. The memory is configured to store a program or instructions. When the program or the instructions is/are executed by the processor, the chip system is enabled to implement the method in the foregoing method embodiments, the method of the CA in the foregoing method embodiments, the method of the NF in the foregoing method embodiments, or the method of the certificate management function in the foregoing method embodiments. Optionally, the chip system further includes an interface circuit, and the interface circuit is configured to exchange code instructions with the processor. Optionally, there may be one or more processors in the chip system, and the processor may be implemented by using hardware or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory. Optionally, there may also be one or more memories in the chip system. The memory may be integrated with the processor, or may be separated from the processor. For example, the memory may be a non-transitory processor, for example, a read-only memory ROM. The memory and the processor may be integrated on a same chip, or may be disposed on different chips respectively.

Based on the foregoing content and a same concept, this application provides a communication system, including one or more of the following: an NF, a CA, a trusted function, and a certificate management function. The NF is configured to perform the method related to the NF in the foregoing method embodiments. The CA is configured to perform the method related to the CA in the foregoing method embodiments. The trusted function is configured to perform the method related to the trusted function in the foregoing method embodiments. The certificate management function is configured to perform the method related to the certificate management function in the foregoing method embodiments. In a possible example, a network architecture of the communication system is shown in FIG. 1a. The communication system includes the NF, the CA, and the trusted function in the method embodiments related to FIG. 3 to FIG. 11. In another possible example, a network architecture of the communication system is shown in FIG. 1b. The communication system includes the NF, the CA, the trusted function, and the certificate management function in the method embodiments related to FIG. 3 to FIG. 11.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

It is clear that a person skilled in the art can make various modifications and variations to this application without departing from the scope of this application. This application is intended to cover these modifications and variations of this application provided that they fall within the scope of protection defined by the claims of this application and their equivalent technologies.

## Claims

1. A communication method, comprising:
receiving a certificate request message, wherein the certificate request message comprises indication information, a first instance identity of a network function, and a signature, the indication information indicates that the certificate request message comprises the signature, and the signature is a signature of a trusted function for a second instance identity of the network function;
performing verification based on the signature and the first instance identity of the network function; and
when the verification succeeds, sending a certificate of the network function.

2. The method according to claim 1, wherein a format of the certificate request message conforms to a protocol message format of a certificate management protocol version 2.

3. The method according to claim 1 or 2, wherein the performing verification based on the signature and the first instance identity of the network function comprises:
performing the verification based on the signature, a certificate of the trusted function, and the first instance identity.

4. The method according to any one of claims 1 to 3, wherein
that the verification succeeds means that the first instance identity is the second instance identity.

5. The method according to any one of claims 1 to 4, wherein the indication information is carried in a registration information field, and the signature is carried in a control field.

6. The method according to claim 5, wherein a type of the control field is a registration token type or an authenticator type.

7. The method according to any one of claims 1 to 4, wherein the indication information is carried in a protection algorithm field, and the signature is carried in a protection field.

8. The method according to any one of claims 1 to 4 and 7, wherein the indication information is a preset protection algorithm, and the preset protection algorithm indicates to use the signature for protection.

9. The method according to any one of claims 1 to 4, wherein in a header field, the indication information occupies an information type field, and the signature occupies an information value field corresponding to the information type field.

10. The method according to any one of claims 1 to 4, wherein the certificate request message is a first public key infrastructure PKI message, and the certificate request message comprises a second PKI message;
an information type field in a body field of the second PKI message indicates that an information value field corresponding to the information type field is the second instance identity; and
a protection algorithm field in a header field of the second PKI message comprises the indication information, and the indication information indicates that a protection field of the second PKI message comprises the signature.

11. The method according to claim 10, wherein the performing verification based on the signature and the first instance identity of the network function comprises:
determining, based on the signature, the certificate of the trusted function, the header field of the second PKI message, and the body field of the second PKI message, that integrity verification on the second PKI message succeeds; and
determining, based on the second instance identity in the body field of the second PKI message and the first instance identity in a certification template field of a body field of the first PKI message, that the verification succeeds.

12. A communication method, comprising:
sending a certificate request message to a certificate authentication function, wherein the certificate request message comprises indication information, a first instance identity of a network function, and a signature, the indication information indicates that the certificate request message comprises the signature, and the signature is a signature of a trusted function for a second instance identity of the network function; and
receiving a certificate of the network function from the certificate authentication function.

13. The method according to claim 12, wherein a format of the certificate request message conforms to a protocol message format of a certificate management protocol version 2.

14. The method according to claim 12 or 13, wherein the first instance identity is the second instance identity.

15. The method according to any one of claims 12 to 14, wherein the indication information is carried in a registration information field, and the signature is carried in a control field.

16. The method according to claim 15, wherein a type of the control field is a registration token type or an authenticator type.

17. The method according to any one of claims 12 to 14, wherein the indication information is carried in a protection algorithm field, and the signature is carried in a protection field.

18. The method according to any one of claims 12 to 14 and 17, wherein the indication information is a preset protection algorithm, and the preset protection algorithm indicates to use the signature for protection.

19. The method according to any one of claims 12 to 14, wherein in a header field, the indication information occupies an information type field, and the signature occupies an information value field corresponding to the information type field.

20. The method according to any one of claims 12 to 14, wherein the certificate request message is a first public key infrastructure PKI message, and the certificate request message comprises a second PKI message;
an information type field in a body field of the second PKI message indicates that an information value field corresponding to the information type field is the second instance identity; and
a protection algorithm field in a header field of the second PKI message comprises the indication information, and the indication information indicates that a protection field of the second PKI message comprises the signature.

21. The method according to claim 20, further comprising:
receiving the second PKI message from the trusted function; and
generating the first PKI message based on the second PKI message.

22. A communication apparatus, comprising a processor and a communication interface, wherein the communication interface is configured to: receive a signal from a communication apparatus other than the communication apparatus and transmit the signal to the processor, or send a signal from the processor to a communication apparatus other than the communication apparatus; and the processor is configured to implement the method according to any one of claims 1 to 11 or the method according to any one of claims 12 to 21 by using a logic circuit or by executing code instructions.

23. A communication apparatus, comprising a module configured to perform the method according to any one of claims 1 to 11 or a module configured to perform the method according to any one of claims 12 to 21.

24. A computer-readable storage medium, wherein the storage medium stores a computer program or instructions, and when the computer program or the instructions is/are executed by a communication apparatus, the method according to any one of claims 1 to 11 or the method according to any one of claims 12 to 21 is implemented.

25. A computer program product, wherein the computer program product comprises a computer program or instructions, and when the computer program or the instructions is/are executed by a communication apparatus, the method according to any one of claims 1 to 11 or the method according to any one of claims 12 to 21 is implemented.
